(19) Europäisches Patentamt
European Patent Office
Office européen des brevets

(11) **EP 3 418 924 A1**

(12) **EUROPÄISCHE PATENTANMELDUNG**

(43) Veröffentlichungstag:
26.12.2018 Patentblatt 2018/52

(51) Int Cl.:
*G06F 17/50* [(2006.01)]     *G05B 13/04* [(2006.01)]
*G05B 17/02* [(2006.01)]

(21) Anmeldenummer: 18178008.1

(22) Anmeldetag: 15.06.2018

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: 20.06.2017 DE 102017113594

(71) Anmelder: **dSPACE digital signal processing and control engineering GmbH**
**33102 Paderborn (DE)**

(72) Erfinder:
• **Kiffe, Axel**
  **32584 Löhne (DE)**
• **Witting, Katrin**
  **33178 Borchen (DE)**
• **Puschmann, Frank**
  **33014 Bad Driburg (DE)**

(54) **COMPUTERIMPLEMENTIERTES VERFAHREN ZUR SIMULATION EINER ELEKTRISCHEN GESAMTSCHALTUNG**

(57) Beschrieben und dargestellt ist ein computerimplementiertes Verfahren (1) zur Simulation einer elektrischen Gesamtschaltung (2) mittels wenigstens einer Recheneinheit (3), wobei die elektrische Gesamtschaltung (2) Schaltungskomponenten aufweist und durch eine Gesamt-Zustandsraumdarstellung (4) mathematisch beschrieben wird, die Gesamtschaltung (2) in einem Trennungsschritt (100) durch Trennen von Schaltungszweigen in wenigstens zwei Teilschaltungen (5a, 5b) zerlegt wird, wobei jede Teilschaltung (5a, 5b) durch jeweils eine Teil-Zustandsraumdarstellung (6a, 6b) mathematisch beschrieben wird, wobei die Teil-Zustandsraumdarstellungen (6a, 6b) über Kopplungsvariablen ($i_{I, II, k}$, $v_{II, I, k}$, $u_{I, MS, k}$, $u_{II, MS, k}$, $y_{I, MS, k}$, $y_{II, MS, k}$) der getrennten Schaltungszweige miteinander gekoppelt sind und jede Teilschaltung (5a, 5b) durch numerisches Lösen der gekoppelten Teil-Zustandsraumdarstellungen (6a, 6b) auf der wenigstens einen Recheneinheit (3) berechnet wird

Das systematische Auffinden stabiler Trennungen der Gesamtschaltung in Teilschaltungen, um so automatisch zu einer stabilen und optimierten Simulation der Funktionalität der elektrischen Gesamtschaltung zu gelangen, wird dadurch erreicht, dass die Kopplung der Teil-Zustandsraumdarstellungen (6a, 6b) in einem Koppelgleichungssystem (11) zum Austausch der berechneten Kopplungsvariablen ($i_{I, II, k}$, $v_{II, I, k}$) zwischen den Teilschaltungen (5a, 5b) abgebildet wird, dass in einem Bewertungsschritt (110) auf Grundlage des Koppelgleichungssystems (11) wenigstens ein Stabilitätsparameter S berechnet wird, dass in einem Auswahlschritt (120) in Abhängigkeit von dem berechneten Stabilitätsparameter S entschieden wird, ob die vorliegende Zerlegung der Gesamtschaltung (2) in Teilschaltungen (5a, 5b) der Simulation zugrunde gelegt wird und dass nach erfolgreicher Auswahl die Simulation der elektrischen Gesamtschaltung (2) durch Berechnung der Teil-Zustandsraumdarstellungen (6a, 6b) auf der wenigstens einen Recheneinheit (3) erfolgt.

Fig. 3

**EP 3 418 924 A1**

**Beschreibung**

Die Erfindung betrifft ein computerimplementiertes Verfahren zur Simulation einer elektrischen Gesamtschaltung mittels wenigstens einer Recheneinheit, wobei die elektrische Gesamtschaltung Schaltungskomponenten aufweist und durch eine Gesamt-Zustandsraumdarstellung mathematisch beschrieben wird, die Gesamtschaltung in einem Trennungsschritt durch Trennen von Schaltungszweigen in wenigstens zwei Teilschaltungen zerlegt wird, wobei jede Teilschaltung durch jeweils eine Teil-Zustandsraumdarstellung mathematisch beschrieben wird, wobei die Teil-Zustandsraumdarstellungen über Kopplungsvariablen der getrennten Schaltungszweige miteinander gekoppelt sind und jede Teilschaltung durch numerisches Lösen der gekoppelten Teil-Zustandsraumdarstellungen auf der wenigstens einen Recheneinheit berechnet wird.

Die Erfindung ist im technischen Bereich der Echtzeitsimulation von elektrischen Schaltungen zum Zweck der Beeinflussung oder des Tests eines technisch-physikalischen Prozesses angesiedelt. Bei dem technisch-physikalischen Prozess kann es sich beispielsweise um einen Elektromotor, ein Energieversorgungsnetz, beliebige angesteuerte Maschinenteile - insbesondere aus der Automatisierungstechnik - handeln, die von der simulierten elektrischen Schaltung angesteuert werden. Bei dem technisch-physikalischen Prozess kann es sich beispielsweise aber auch um Steuergeräte handeln, wie sie in großer Zahl in Kraftfahrzeugen, Flugzeugen, Energiegewinnungs- oder Energieverteilungsanlagen usw. zum Einsatz kommen. Der erste Anwendungsfall wird oft mit dem Begriff Rapid Control Prototyping (RCP) umschrieben, der zweite Anwendungsfall betrifft den Bereich der Hardware-inthe-Loop-Simulation (HIL).

Die eingangs erwähnte Recheneinheit, mittels derer die Simulation durchgeführt wird, ist deshalb häufig Bestandteil eines Steuergerätes oder eines HIL-Simulators, die jeweils über eine I/O-Schnittstelle verfügen. Über die I/O-Schnittstelle können elektrische Signale eingelesen oder ausgegeben werden, wobei es sich bei den elektrischen Signalen um analoge oder digitale nachrichtentechnische Signale mit niedriger Leistung handeln kann, im Falle leistungselektronischer Anwendungen können über die I/O-Schnittstelle aber auch erhebliche elektrische Leistungen übertragen werden, beispielsweise zur Ansteuerung von elektrischen Motoren.

Über die I/O-Schnittstelle werden also ausgewählte berechnete Ausgangsgrößen der elektrischen Gesamtschaltung als elektrische Signale ausgegeben, sodass sie auf einen technisch-physikalischen Prozess einwirken. Zusätzlich oder alternativ werden Prozessgrößen des technisch-physikalischen Prozesses messtechnisch erfasst und in Form elektrischer Signale über die I/O-Schnittstelle eingelesen und der Recheneinheit zur Verfügung gestellt. Die Simulation hat unmittelbaren Einfluss auf die physikalische Welt.

Bei leistungselektronischen Anwendungen, bei denen es beispielsweise um elektrische Antriebe, elektrische Generatoren oder um elektrische Energieversorgungsnetze geht, weist die elektrische Gesamtschaltung typischerweise neben ohmschen Widerständen, Kapazitäten und Spulen auch eine Vielzahl an (Halbleiter-)Schaltern auf, beispielsweise in Leistungsendstufen zur Realisierung eines Umrichters. In der Gesamtschaltung können dann beispielsweise Stromrichtersteuerdaten erzeugt werden, die zur geeigneten Ansteuerung der Leistungsschalter des Umrichters dienen, wobei diese üblicherweise als Halbleiterschaltelemente (z. B. MOSFET, metal-oxide-semiconductor fieldeffect transistor) realisiert sind. Diese Leistungsschalter sind aktiv durch einen Steueranschluss durchschaltbar bzw. sperrbar. Andere Schaltelemente in leistungselektronischen Schaltungen sind Dioden, die beispielsweise antiparallel zu Leistungsschaltern in Brückenschaltungen eingesetzt werden und über die sich bei geöffneten Leistungsschaltern durch Induktivitäten getriebene Ströme abbauen können. Diese Freilaufdioden - wie natürlich auch andere Dioden - sind nicht aktiv über einen Steueranschluss durchschaltbar oder sperrbar, vielmehr ergibt sich ihr Leitungszustand aus ihren elektrischen Anschlussgrößen, also aus ihrer Klemmenspannung oder dem internen Diodenstrom.

Die Simulation derartiger Schaltungen, insbesondere leistungselektronischer Schaltungen, stellt hohe Anforderungen an die verwendete Simulationshardware, also an die verwendeten Recheneinheiten und deren Speicherausstattung, insbesondere auch deshalb, weil die Simulation üblicherweise in Echtzeit erfolgen muss, da auf einen realen Prozess eingewirkt wird bzw. von einem realen Prozess messtechnisch erhaltene Größen im Rahmen der Simulation verarbeitet werden. Es ist also regelmäßig darauf zu achten, ob Anforderungen hinsichtlich Rechenzeit und Speicher erfüllt werden.

Eine Möglichkeit zur Begegnung dieser Problematik besteht darin, die Gesamtschaltung in dem eingangs genannten Trennschritt durch Trennen von Schaltungszweigen in wenigstens zwei Teilschaltungen zu zerlegen. Es ist einleuchtend, dass die mathematische Beschreibung jeder einzelnen Teilschaltung im Ergebnis weniger aufwendig ist als die mathematische Beschreibung der elektrischen Gesamtschaltung. Die mathematische Beschreibung derartiger Systeme erfolgt üblicherweise im Rahmen einer Zustandsraumdarstellung, wobei die Zustandsgrößen hier Kondensatorspannungen und Spulenströme in den Schaltungszweigen der Gesamtschaltung bzw. der elektrischen Teilschaltungen sind.

Selbstverständlich können die durch den Trennungsschritt erhaltenden Teilschaltungen nicht vollkommen unabhängig voneinander betrachtet und berechnet werden, vielmehr sind die Teilschaltungen an den Trennstellen durch entsprechende Kopplungsvariablen der getrennten Schaltungszweige miteinander gekoppelt, wobei jede Teilschaltung diese Koppelgrößen als Ein- und Ausgangsgrößen bzw. als Aus- und Eingangsgrößen enthält. Die Zerlegung der elektrischen Gesamtschaltung in zwei und noch weitere Teilschaltungen eröffnet die Nutzung beispielsweise mehrerer Recheneinheiten, wobei die elektrischen Teilschaltungen bzw. deren korrespondierenden Teil-Zustandsraumdarstellungen auf den verschiedenen Recheneinheiten berechnet werden, sodass eine größere Rechenkapazität nutzbar ist.

Bei den Recheneinheiten kann es sich um verschiedene Kerne eines Prozessors handeln, es kann sich aber auch um verschiedene Prozessoren eines Mehrprozessor-Systems handeln, was nicht selten bei größeren HIL-Simulatoren der Fall ist. Es ist auch möglich, dass eine Recheneinheit bzw. mehrere Recheneinheiten auf Basis eines (oder mehrerer) FPGA (field programmable gate array) realisiert ist bzw. sind, was Geschwindigkeitsvorteile mit sich bringt aber auch Schwierigkeiten hinsichtlich bestimmter numerischer Operationen wie die Divisionen.

Die Zerlegung der Gesamtschaltung in Teilschaltungen und die damit einhergehende Zerlegung der Gesamt-Zustandsraumdarstellungen in mehrere Teil-Zustandsraumdarstellungen ist jedoch nicht nur vorteilhaft bei der Verwendung mehrerer Recheneinheiten, sie kann auch vorteilhaft sein bei der Verwendung nur einer einzigen Recheneinheit. Enthält eine Gesamtschaltung beispielsweise n Schalter, dann resultieren insgesamt $2^n$ Schaltzustände der Gesamtschaltung. Diese Zustände der Gesamtschaltung werden jeweils separat mathematisch in den Zustandsraumdarstellungen abgebildet durch eine entsprechende Anzahl an verschiedenen Matrizen der Zustandsraumdarstellung, die an den entsprechenden Positionen im Leitungsfall eines Schalters einen entsprechenden elektrischen Leitwert enthalten, im Falle des sperrenden Zustands des Schalters einen sehr viel geringeren Leitwert oder eben den Leitwert 0 enthalten. Werden alle Schalterstellungen mathematisch modelliert, resultiert eine entsprechende Anzahl an Matrizen für die verschiedenen Zustandsraumdarstellungen mit einem entsprechend hohen Speicherbedarf. Bei einer Zerlegung in zwei Teilschaltungen reduziert sich die Anzahl der Schaltungskombinationen auf $2^{n1} + 2^{n2} < 2^n$ (n = n1 + n2), was den vorteilhaften Effekt selbst bei Verwendung nur einer einzigen Recheneinheit erklärt.

Zu berücksichtigen ist jedoch, dass nicht jede Auftrennung einer elektrischen Gesamtschaltung in mehrere Teilschaltungen gleichermaßen geeignet ist, da die Trennung Auswirkungen auf die Stabilität und die Genauigkeit der Simulation, also auf die Berechnung der Teilschaltungen auf der wenigstens einen Recheneinheit hat. Bei ungünstigen Auftrennungen der Gesamtschaltung kann sich herausstellen, dass die Berechnung der den Teilschaltungen entsprechenden Teil-Zustandsraumdarstellungen unter den gegebenen Randbedingungen - wie z. B. der zeitlichen numerischen Berechnungsschrittweite - nicht möglich ist. Das Auffinden einer vorteilhaften Trennung der Gesamtschaltung in Teilschaltungen erfordert Erfahrung und Expertenwissen.

Im Stand der Technik wird die Trennung der Gesamtschaltung in Teilschaltungen manuell vorgenommen, also beispielsweise durch zwar grafisch computerunterstütztes aber vom Bediener rein manuelles Kennzeichnen der Trennstellen in der grafisch dargestellten Gesamtschaltung (dSPACE GmbH: "Manual of the Electrical Power Systems Simulation Package", September 2016, oder Opal-RT: "ARTEMiS User Guide", Version 6.1, 2008) Der Bediener wählt die Trennstellen alleine aufgrund seiner Erfahrung aus. Um herauszufinden, ob die so erhaltene Auftrennung der Gesamtschaltung in Teilschaltungen numerisch stabil ist, wird dann üblicherweise eine Simulation auf Basis der Zerlegung durchgeführt und die Stabilität anhand des Simulationsergebnisses beurteilt, also beispielsweise beobachtet, ob bestimmte Zustandsgrößen Werte annehmen, die tatsächlich nie erreicht werden könnten. Diese Vorgehensweise ist extrem zeitaufwendig, erfordert ein erhebliches Expertenwissen und führt nicht zwingend zu stabilen Simulationen, da in dem Testlauf der Simulation zur Bewertung der Stabilität möglicherweise bestimmte Schaltzustände überhaupt nicht erreicht worden sind oder der Testlauf nicht lange genug durchgeführt wurde, um ein instabiles Verhalten offenzulegen, weil sich in der Simulationszeit Fehler noch nicht hinreichend akkumuliert haben, um eine Instabilität zweifelsfrei erkennen zu können.

Aufgabe der vorliegenden Erfindung ist es deshalb, das eingangs geschilderte Verfahren zur Simulation einer elektrischen Gesamtschaltung so zu verbessern, dass systematisch stabile Trennungen der Gesamtschaltung in Teilschaltungen ermittelt werden, um so automatisch zu einer stabilen und optimierten Simulation der Funktionalität der elektrischen Gesamtschaltung auf Basis der Teilschaltungen zu gelangen.

Die zuvor hergeleitete Aufgabe ist erfindungsgemäß im Wesentlichen zunächst dadurch gelöst, dass die Kopplung der Teil-Zustandsraumdarstellungen in einem Koppelgleichungssystem zum Austausch der berechneten Kopplungsvariablen zwischen den Teilschaltungen abgebildet wird, dass in einem Bewertungsschritt auf Grundlage des Koppelgleichungssystems wenigstens ein Stabilitätsparameter berechnet wird, dass in einem Auswahlschritt in Abhängigkeit von dem Stabilitätsparameter entschieden wird, ob die vorliegende Zerlegung der Gesamtschaltung in Teilschaltungen der Simulation zugrunde gelegt wird und dass nach erfolgreicher Auswahl die Simulation der elektrischen Gesamtschaltung durch Berechnung der Teil-Zustandsraumdarstellungen auf der wenigstens einen Recheneinheit erfolgt.

Die erfindungsgemäße Lösung unterscheidet sich grundlegend von dem aus dem Stand der Technik bekannten "Trial and Error"-Verfahren auf Grundlage von tatsächlich vorgenommenen Simulationen. Grundlage des erfindungsgemäßen Verfahrens sind die Teil-Zustandsraumdarstellungen, die durch ein Koppelgleichungssystem zum Austausch der berechneten Kopplungsvariablen miteinander verbunden sind. In dem darauffolgenden Bewertungsschritt wird auf Grundlage des Koppelgleichungssystems zumindest ein Stabilitätsparameter für die Simulation berechnet. Es wird somit also auf systemtheoretischer Grundlage eine Bewertung der Trennung der Gesamtschaltung in Teilschaltungen bewirkt. Diese Bewertung kann klassischer systemtheoretischer Natur sein in Form der Ermittlung von Eigenwerten der aufgrund der Trennung erworbenen Teil-Zustandsraumdarstellungen, die durch die Koppelgleichungen miteinander verbunden sind. Es kann sich aber auch um auf dieser mathematischen Darstellung fußende numerische Betrachtungen handeln, wenn bestimmte numerische Verfahren zur Lösung des durch die Trennung der Gesamtschaltung erhaltenen Gleichungssystems betrachtet werden. In das Koppelgleichungssystem können darüber hinaus auch bestimmte Verzögerungseffekte eingebracht werden, die mit der numerischen Lösung der Teilsysteme und dem Austausch der Koppelvariablen einhergehen. Schlussendlich wird aber in jedem Fall eine theoretische Stabilitätsbetrachtung durchgeführt, ohne dass es einer Simulation auf Basis der getrennten Teilschaltungen bedürfte.

Das Ergebnis der Stabilitätsbetrachtung ist dann die Grundlage für die in dem Auswahlschritt in Abhängigkeit von dem berechneten Stabilitätsparameter getroffene Entscheidung, ob die vorliegende Zerlegung der Gesamtschaltung in Teilschaltungen der Simulation zugrunde gelegt wird. Ist das Ergebnis des Bewertungsschrittes, dass die getroffene Zerlegung instabil ist oder nicht hinreichend genau ist (so dass verhältnismäßig lange Zeiten benötigt werden, bis ein stabiles Ergebnis erzielt wird), so kann eine Zerlegung der Gesamtschaltung in Teilschaltungen auch verworfen werden.

Wenn die Zerlegung der Gesamtschaltung jedoch nicht verworfen wird, also eine erfolgreiche Auswahl getroffen worden ist, dann erfolgt die Simulation der elektrischen Gesamtschaltung durch Berechnung der zuvor systemtheoretisch/numerisch beurteilten Teil-Zustandsraumdarstellungen auf der wenigstens einen Recheneinheit. Im Unterschied zu aus dem Stand der Technik bekannten Verfahren erfolgt hier eine sichere Auswahl einer bestimmten Trennung der Gesamtschaltung in Teilschaltungen aufgrund systemtheoretischer bzw. numerischer Überlegungen, so dass auch die Simulation der Funktionalität der Gesamtschaltung auf Grundlage der Teilschaltungen sicher ist und ein grundlegendes Stabilitätserfordernis oder auch ein Erfordernis hinsichtlich der Genauigkeit der Berechnung von vorneherein garantiert werden kann. Dies hat nicht nur für den Anwender praktische Vorteile (Zeitersparnis ohne langwierige Simulationen), vielmehr wird auch die Güte der Simulation durch die Stabilitätsbetrachtung der Teilmodelle und insbesondere der Koppelgleichungen vorhersehbar. Da durch die Simulation im Regelfall unmittelbar auf echte technisch-physikalische Prozesse eingewirkt wird, trägt das erfindungsgemäße Verfahren auch erheblich zur Prozesssicherheit bei.

In dem Auswahlschritt ist es dann möglich, in Abhängigkeit von dem berechneten Stabilitätsparameter zu entscheiden, ob die vorliegende Zerlegung der Gesamtschaltung in Teilschaltungen der Simulation zugrunde gelegt wird. Auf dieser Basis kann dann nach erfolgreicher Auswahl der als geeignet erkannten Zerlegung der Gesamtschaltung die Simulation der elektrischen Gesamtschaltung durch Berechnung der Teil-Zustandsraumdarstellungen der Teilschaltungen auf der Recheneinheit erfolgen.

Gemäß einer bevorzugten Ausgestaltung des Verfahrens ist vorgesehen, dass im Falle der direkten numerischen Lösung des Koppelgleichungssystems, also durch Anwendung eines direkten numerischen Verfahrens zur Lösung von Gleichungssystemen, als Stabilitätsparameter ein numerischer Güteparameter berechnet wird, wobei dieser numerischer Güteparameter wenigstens eine der folgenden Größen umfasst: Die Kondition, die Stabilität, die Konsistenz, die Konvergenz. Hierbei handelt es sich um dem Grunde nach bekannte Parameter zur Beurteilung der Stabilität, der Genauigkeit oder der Geschwindigkeit eines direkten numerischen Lösungsverfahrens.

Im Falle der iterativen numerischen Lösung des Koppelgleichungssystems ist vorgesehen, dass als Stabilitätsparameter die Eigenwerte des Koppelgleichungssystems bestimmt werden. Insbesondere ist vorgesehen, dass der Spektralradius des Koppelgleichungssystems als Stabilitätsparameter bestimmt wird.

Eine weitere Ausgestaltung des erfindungsgemäßen Verfahrens sieht vor, dass durch das Einfügen wenigstens einer Totzeit in das Koppelgleichungssystem das Koppelgleichungssystem von einem impliziten mathematischen Zusammenhang in einen expliziten mathematischen Zusammenhang zwischen den Kopplungsvariablen überführt wird. Es folgen dann praktisch Bestimmungsgleichungen für die Koppelgrößen, deren Werte sich für den aktuellen Berechnungsschritt so unmittelbar ergeben. Das Einfügen einer Totzeit, beispielsweise durch Verwendung des Wertes einer Kopplungsvariablen zum Zeitpunkt k-1 anstelle des Wertes der Kopplungsvariablen zum Zeitpunkt k, ist nicht nur ein "mathematischer Kniff", sondern kann auch als eine Modellierungsmaßnahme aufgefasst werden mit einem echten physikalischen Hintergrund: Werden die Teilsysteme und damit die Teil-Zustandsraumdarstellungen auf verschiedenen Recheneinheiten berechnet, müssen die Kopplungsvariablen übertragen werden, was immer Zeit kostet und daher ein totzeitbehafteter Vorgang ist, der so abgebildet wird.

Eine Weiterentwicklung dieses Verfahrens zeichnet sich dadurch aus, dass eine Kopplungsvariable in einem Berechnungsschritt k berechnet wird durch eine Extrapolation mehrerer vorangegangener Werte dieser Kopplungsvariable in vergangenen Berechnungsschritten (k-1, k-2, ...). Es wird also durch die Extrapolation eine Schätzung des Wertes einer Kopplungsvariable zum Zeitpunkt k berechnet aus vergangenen Werten dieser Zustandsvariablen. Berechnungen haben gezeigt, dass damit signifikant bessere Berechnungsergebnisse erzielt werden gegenüber dem reinen Ersatz des Wertes einer Zustandsvariable zum Zeitpunkt k durch einen älteren Wert dieser Zustandsvariable.

Dies trifft insbesondere dann zu, wenn die Einfügung einer Totzeit keine Entsprechung im System hat und eigentlich zu vermeiden ist.

In dem vorgenannten Fall zeichnet sich eine Weiterentwicklung des Verfahrens zur Simulation der elektrischen Gesamtschaltung dadurch aus, dass aus den Teil-Zustandsraumdarstellungen und den durch die aufgenommenen Totzeiten erweiterten Koppelgleichungen eine zusammengesetzte Gesamt-Zustandsraumdarstellung gebildet wird und als Stabilitätsparameter die Eigenwerte der zusammengesetzten Gesamt-Zustandsraumdarstellung ermittelt werden.

Eine vorteilhafte Weiterbildung des Verfahrens unter Verwendung von zusätzlichen Totzeiten in den Koppelgleichungen betrifft die Bewertung der ermittelten Eigenwerte der zusammengesetzten Gesamt-Zustandsraumdarstellungen. Hier werden zusätzlich die Eigenwerte der Gesamt-Zustandsraumdarstellung der ungetrennten Gesamtschaltung bestimmt, also des ungetrennten Systems. Dann werden für jeden Eigenwert der Gesamt-Zustandsraumdarstellung die Abstände zu den Eigenwerten der zusammengesetzten Gesamt-Zustandsraumdarstellungen ermittelt und für die Berechnung eines summarischen Stabilitätsparameters aber nur der minimale Eigenwertabstand (und damit die betragsmäßig minimale Eigenwertdifferenz) verwendet. So wird mit jedem Eigenwert der nicht-zusammengesetzten Gesamt-Zustandsraumdarstellung verfahren. Die minimalen Eigenwertabstände (also die Beträge der Eigenwertdifferenzen) werden aufsummiert. Der so erhaltene Wert ist ein Maß dafür, inwieweit sich die Eigenwerte des aufgetrennten Systems von dem nicht-aufgetrennten System entfernt haben. Je geringer der Summenabstand ist, desto besser ist die Güte der vorgenommenen Trennung hinsichtlich Stabilität, wenn davon ausgegangen wird, dass die nicht-aufgetrennte Gesamtschaltung natürlich eine (numerisch) stabile Lösung darstellt.

Eine besonders vorteilhafte Variante des Verfahrens zur Simulation einer elektrischen Gesamtschaltung zeichnet sich dadurch aus, dass die Gesamtschaltung in mehreren Trennschritten in mehrere verschiedene Teilschaltungsvarianten zerlegt wird. Für jede der verschiedenen Teilschaltungsvarianten wird dann in einem eigenen Bewertungsschritt wenigstens ein Stabilitätsparameter berechnet, sodass eine Mehrzahl von Stabilitätsparametern resultiert. In dem Auswahlschritt wird dann in Abhängigkeit von der Mehrzahl der berechneten Stabilitätsparameter, insbesondere durch Vergleich der Mehrzahl berechneter Stabilitätsparameter, die am besten geeignete Zerlegung der Gesamtschaltung ausgewählt.

Eine Weiterbildung des Verfahrens widmet sich der eingangs geschilderten Problematik des Auffindens aussichtsreicher Trennstellen in der Gesamtschaltung. Bei einer dahingehenden Weiterbildung des Verfahrens ist vorgesehen, dass in einem Detektionsschritt zur Detektion abhängiger Schaltungskomponenten in der Gesamtschaltung die direkt voneinander abhängigen Zustandsgrößen der Gesamtschaltung und damit die linear abhängigen Schaltungskomponenten ermittelt werden. Solche Abhängigkeiten liegen beispielsweise dann vor, wenn sich Maschen ausbilden, in denen nur Kondensatoren und Spannungsquellen sind oder wenn sich Knoten ausbilden, an denen nur Stromquellen und Induktivitäten anliegen.

In einem Trennungsausschlussschritt werden dann die Schaltungszweige zwischen den abhängigen Schaltungskomponenten als Orte möglicher Trennungen der Gesamtschaltung ausgeschlossen und in dem nachfolgenden Trennschritt werden die Schaltungszweige ausgenommen, die im Trennungsausschlussschritt als Orte möglicher Trennungen der Gesamtschaltung ausgeschlossen worden sind. Durch diese Maßnahme werden Trennungen von linear abhängigen Zustandsgrößen vermieden und verhindert, dass eine Auftrennung der Gesamtschaltung dort erfolgt, wo im mathematischen Sinne eine steife Kopplung von Zustandsgrößen vorliegt.

Die im Trennungsausschlussschritt ermittelten Schaltungszweige können dem Verwender entweder angezeigt werden, sodass dieser die entsprechenden Schaltungszweige bei einer möglichen manuellen Platzierung von Trennstellen meidet. Natürlich kann auch bei einer vollautomatisierten Trennung der Gesamtschaltung durch einen Computer eine Trennung zwischen linear abhängigen Zustandsgrößen ausgeschlossen werden, indem beispielsweise entsprechende Vermerke für ein Trennungsverbot in einer Netzliste für die Gesamtschaltung hinterlegt werden.

Bei einer Weiterbildung des Verfahrens hinsichtlich des Detektionsschrittes ist vorgesehen, dass zur Detektion abhängiger Schaltungskomponenten in der Gesamtschaltung abhängige Schaltergruppen ermittelt werden, also diejenigen Schalter, die unmittelbaren Einfluss aufeinander haben. Das kann beispielsweise die Hintereinanderschaltung eines MOSFET und einer Diode sein. Der MOSFET kann aktiv von außen geschaltet werden, er hat also einen erzwungenen Schaltzustand, während die Diode ihren Schaltzustand in Abhängigkeit von dem Schaltzustand des MOSFET und den sich dann ergebenden Anschlusswerten der Diode einstellt. Auch derartige, unmittelbar zusammengehörende und voneinander abhängige Schalterereignisse dürfen nicht voneinander getrennt werden.

Wie schon zuvor zu der Detektion abhängiger Schaltungskomponenten ausgeführt, kann auch dieser Verfahrensschritt unterstützend für einen Verwender des Verfahrens umgesetzt werden, indem ihm die Elemente detektierter abhängiger Schaltergruppen angezeigt werden, er aber selbst potenzielle Trennstellen in der Gesamtschaltung definiert. Der Verfahrensschritt kann aber auch vollständig automatisiert erfolgen.

In einer bevorzugten Ausgestaltung des Verfahrens werden Stabilitätsparameter für mehrere Kombinationen von Schalterstellungen berechnet. Wie eingangs erläutert worden ist, führt jede veränderte Schalterstellung notwendigerweise zu einer veränderten mathematischen Beschreibung, also zu einer veränderten Zustandsraumdarstellung der entsprechenden Schaltung, Matrixpositionen weisen veränderte Werte auf, in Abhängigkeit von Schalterpositionen. So werden für mehrere Kombinationen von Schalterstellungen Stabilitätsparameter erhalten, die in ihrer Gesamtheit bewertet werden können. Es kann dann der Trennung der Gesamtschaltung der Vorzug gegeben werden, der in Summe das beste Stabilitätsverhalten hat. Vorzugsweise werden nur die Kombinationen von Schalterstellungen berücksichtigt, die auch tatsächlich auftreten können. Beispielsweise werden die Schalter in einem Umrichter nur in ganz bestimmter Art und Weise anhand eines festen Schaltschemas betätigt, sodass nur eine ganz begrenzte Auswahl an Schalterstellungen von den theoretisch insgesamt möglichen Schalterstellungen überhaupt betrachtet werden muss.

Schließlich zeichnet sich eine weitere Ausgestaltung des Verfahrens dadurch aus, dass in dem Trennschritt die Wahl der zu trennenden Schaltungszweige der Gesamtschaltung danach erfolgt, ob die entstehenden Teilsysteme in etwa gleich viele Energiespeicher in Form von Spulen und Kondensatoren aufweisen und/oder ob die entstehenden Teilsysteme in etwa gleich viele Schalter aufweisen, insbesondere wobei eine Grenze vorgegeben wird für eine akzeptable Abweichung von der Gleichheit der Anzahl von Energiespeichern und/oder Schaltern und/oder Ein- und/oder Ausgängen.

Im Einzelnen gibt es nun verschiedene Möglichkeiten, das erfindungsgemäße Verfahren zur Simulation einer elektrischen Gesamtschaltung auszugestalten und weiterzubilden. Dazu wird verwiesen auf die dem Patentanspruch 1 nachgeordneten Patentansprüche und auf die Beschreibung bevorzugter Ausführungsbeispiele in Verbindung mit der Zeichnung. In der Zeichnung zeigen

Fig. 1  eine elektrische Gesamtschaltung mit Halbleiter-Schaltelementen und die Handhabung der Halbleiter-Schaltelemente, um zu einer Zustandsraumdarstellung zu gelangen,

Fig. 2  die Zustandsraumbeschreibung der Gesamtschaltung sowie die Berechnung der Gesamtschaltung anhand der Gesamt-Zustandsraumdarstellung,

Fig. 3  eine Auftrennung der Gesamtschaltung aus Fig. 1 in zwei Teilschaltungen mit entsprechenden Teil-Zustandsraumdarstellungen und Kopplungsvariablen,

Fig. 4  einen HIL-Simulator mit einer I/O-Schnittstelle und einem angeschlossenen Steuergerät,

Fig. 5  Teil-Zustandsraumdarstellungen mit Koppelgleichungssystem und Berechnung eines Stabilitätsparameters auf Grundlage des Koppelgleichungssystems,

Fig. 6  ein Ablaufdiagramm mit Trennungsschritt, Bewertungsschritt, Auswahlschritt und letztlich der Simulation der ausgewählten gekoppelten Teilschaltungen,

Fig. 7  eine Gesamtschaltung mit verschiedenen möglichen Trennstellen,

Fig. 8  ein Ablaufdiagramm ähnlich Fig 6 mit der Bestimmung einer Mehrzahl an Stabilitätsparametern,

Fig. 9  eine Auswertung der verschiedenen Trennstellen gemäß Fig. 7 hinsichtlich Stabilität, Zustandsverteilung und Speicheranforderung und

Fig. 10  Teilschaltungen mit Trennstellen, die zu Teil-Zustandsraumdarstellungen ohne direkten Durchgriff der Kopplungsvariablen führen.

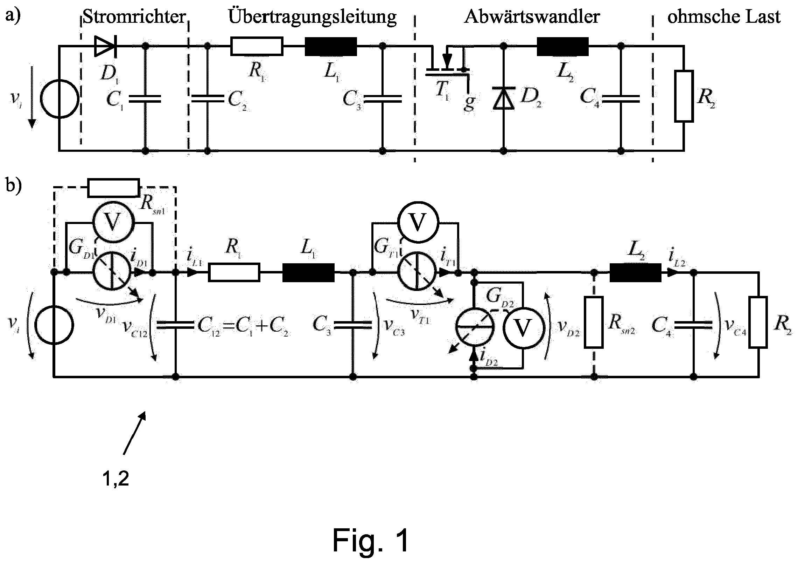

In den Fig. 1 bis 10 ist mit unterschiedlichen Schwerpunkten ein computerimplementiertes Verfahren 1 zur Simulation einer elektrischen Gesamtschaltung 2 mit Schaltungskomponenten (R, L, C, D, T) dargestellt.

Die beispielhafte Gesamtschaltung 2 in Fig. 1a umfasst von links nach rechts einen Stromrichter (Rectifier), eine Übertragungsleitung (Transmission line), einen Abwärtswandler (Buck converter) und eine ohmsche Last (Load). Halbleiter-Schalter sind die Dioden $D_1$, $D_2$ und der MOSFET-Transistor $T_1$. Fig. 1b zeigt die Übertragung der Gesamtschaltung 2 in eine geeignete Darstellung zur Formulierung der Gesamtschaltung 2 im Zustandsraum. Die Halbleiter-Schalter $D_1$, $D_2$, $T_1$ werden hier durch spannungsgesteuerte Stromquellen mit einem Leitwert G, $GD_1$, $GD_2$, $G_{T1}$ abgebildet. Die Leitwerte G ändern sich je nach Schaltzustand der Halbleiterschalter $D_1$, $D_2$, $T_1$, sodass in der Zustandsraumdarstellung je nach Schaltzustand der Halbleiterschalter $D_1$, $D_2$, $T_1$ unterschiedliche Leitwertmatrizen G resultieren. Die Gesamtschaltung 2 lässt sich nun durch eine zeitkontinuierliche Gesamt-Zustandsraumdarstellung 4 beschreiben (Gleichung 1):

$$\dot{\mathbf{x}} = \mathbf{A}^{(\xi)}\mathbf{x} + \mathbf{B}^{(\xi)}\mathbf{u}, \quad \mathbf{y} = \mathbf{C}^{(\xi)}\mathbf{x} + \mathbf{D}^{(\xi)}\mathbf{u}$$

$$\mathbf{A}^{(\xi)} = \mathbf{A} + \mathbf{B}\mathbf{G}^{(\xi)}\mathbf{N}\mathbf{C}, \; \mathbf{B}^{(\xi)} = \mathbf{B} + \mathbf{B}\mathbf{G}^{(\xi)}\mathbf{N}\mathbf{D}, \;\; \mathbf{C}^{(\xi)} = \mathbf{N}\mathbf{C}, \;\; \mathbf{D}^{(\xi)} = \mathbf{N}\mathbf{D}, \;\; \mathbf{N} = \left(\mathbf{I} - \mathbf{D}\widetilde{\mathbf{G}}^{(\xi)}\right)^{-1}$$

.

In dieser Darstellung sind **A** die Systemmatrix, **B** die Eingangsmatrix, **C** die Ausgangsmatrix und **D** die Durchgangsmatrix, wie dies aus der Systemtheorie bekannt ist. Bei **I** handelt es sich um die Einheitsmatrix und bei **G** um die schaltzustandsabhängige Leitwertmatrix, wobei $\xi$ den $\xi$-ten Schaltzustand darstellt. Wie bei numerischen Berechnungen üblich, lassen sich diese Zusammenhänge in einer zeitdiskreten Gesamt-Zustandsraumdarstellung 4 formulieren (Gleichung 2):

$$\mathbf{x}_{k+1} = \boldsymbol{\Phi}^{(\xi)}\mathbf{x}_k + \mathbf{H}^{(\xi)}\mathbf{u}_{L,k}$$

$$\mathbf{y}_k = \mathbf{C_d}^{(\xi)}\mathbf{x}_k + \mathbf{D_d}^{(\xi)}\mathbf{u}_{L,k}$$

.

Diese mathematischen Beschreibungen einer Gesamtschaltung 2 mit Schaltungskomponenten R, L, C, D, T sind im Grunde aus dem Stand der Technik bekannt, genauso wie die Handhabung der (Halbleiter-)Schaltelemente $D_1$, $D_2$, $T_1$.

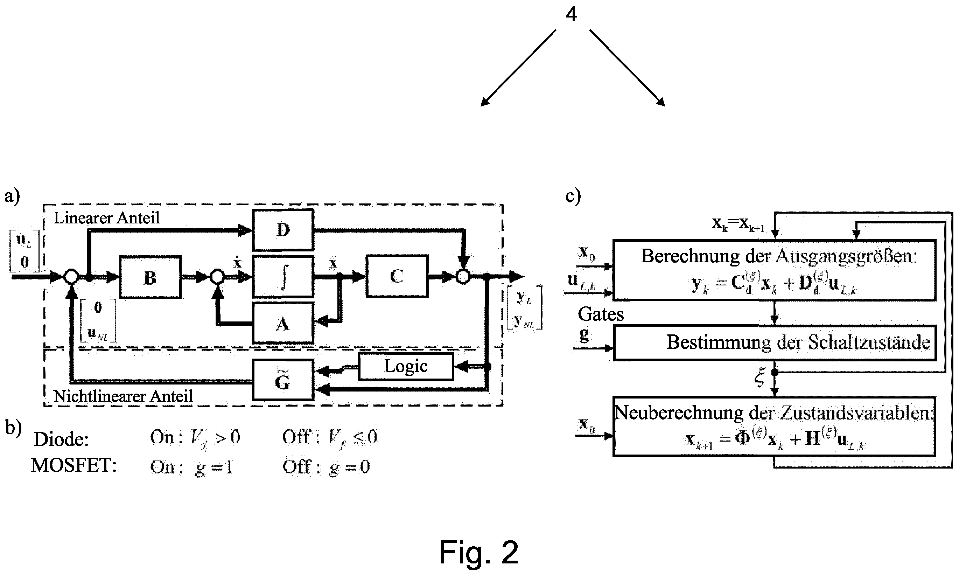

Fig. 2a zeigt eine Blockschaltbilddarstellung der Gesamt-Zustandsraumdarstellung 4 der Gesamtschaltung 2. Es ist zu erkennen, dass der durch die Halbleiter-Schalter bedingte nichtlineare Anteil der Gesamt-Zustandsraumdarstellung 4 (Nonlinear part) durch eine entsprechende Schaltungslogik (Logic) aufgegriffen wird, wie dies in Fig. 2b erläutert ist. In Fig. 2c ist dargestellt, wie die Gesamtschaltung 2 dann auf Basis der Gesamt-Zustandsraumdarstellung 4 mathematisch gelöst wird. Auf Basis der zuletzt berechneten Zustandsvariablen $\mathbf{x}_k$ und von Eingangsgrößen $\mathbf{u}_{L,k}$ werden die Ausgangsgrößen $\mathbf{y}_k$ (Calculation of the output values) berechnet. Auf Grundlage der Ansteuerung der ansteuerbaren Halbleiter-Schalter (Gates, switch-state determination) ergibt sich ein Schaltzustand $\xi$ der Gesamtschaltung 2, wobei es bei der Bestimmung des Schaltzustandes $\xi$ zu einer Zwischeniteration oder auch zu mehreren Zwischeniterationen kommen kann, bis ein stationärer Schaltzustand $\xi$ gefunden wird. Dies liegt daran, dass insbesondere passive Schalter, die also keinen externen Ansteuerungsanschluss haben, wie beispielsweise die in den Fig. 1 und 2 dargestellten Dioden $D_1$, $D_2$, einen Schaltzustand einnehmen, der von ihren Anschlussgrößen abhängt, also von ihrer Klemmenspannung und von ihrem internen Strom. Demzufolge kann es einige Berechnungsiterationen innerhalb der eigentlichen Berechnungsschrittweite dauern, bis ein Schaltzustand $\xi$ stationär bleibt. Schließlich wird eine Neuberechnung der Zustandsgrößen $\mathbf{x}_{k+1}$ durchgeführt (Update of the state variables).

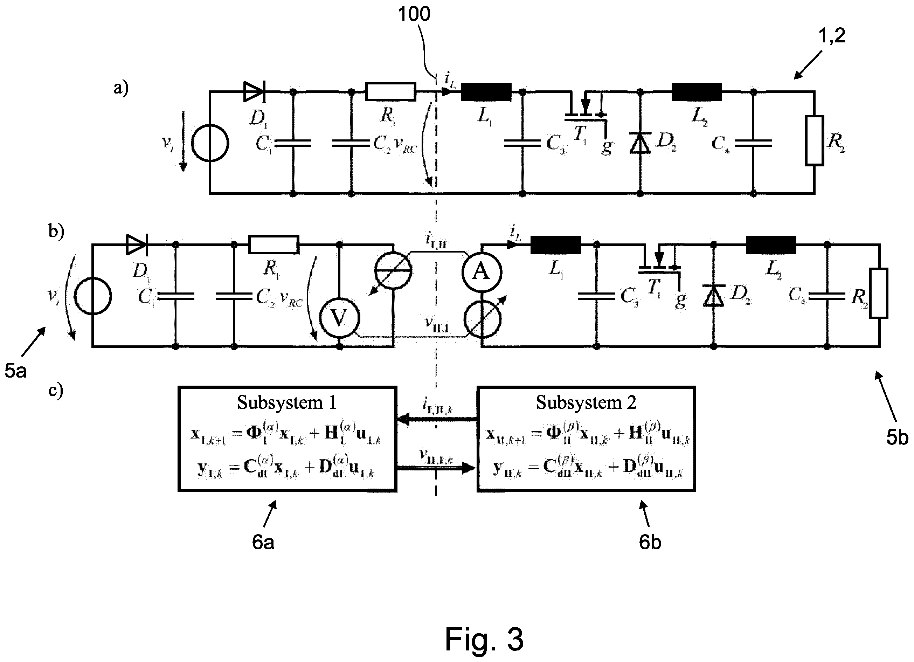

In Fig. 3a ist zum besseren Verständnis noch einmal die Gesamtschaltung 2 dargestellt, wie sie auch schon in Fig. 1a gezeigt worden ist. Durch die vertikale gestrichelte Linie ist ein Trennungsschritt 100 angedeutet, in dem durch Trennen von Schaltungszweigen die elektrische Gesamtschaltung 2 in zwei Teilschaltungen 5a, 5b zerlegt wird. Das Ergebnis des Trennungsschritts 100 ist in Fig. 3b dargestellt. In dem Trennungsschritt 100 können weitaus mehr Teilschaltungen 5 erzeugt werden, zur Veranschaulichung der Vorgehensweise ist das Beispiel hier auf zwei Teilschaltungen 5a, 5b begrenzt. Jede der Teilschaltungen 5a, 5b wird durch eine Teil-Zustandsraumdarstellung 6a, 6b mathematisch beschrieben, wie dies in Fig. 3c gezeigt ist. Die Teil-Zustandsraumdarstellungen 6a, 6b (in Fig. 3 auch als Subsystem 1 und Subsystem 2 bezeichnet) sind auch hier wieder zeitdiskret. Da die Teilschaltungen 5a, 5b an der Trennungsstelle, also an den getrennten Schaltungszweigen, nicht unabhängig voneinander sind, sondern miteinander gekoppelt sind, wird dieser Zusammenhang als Kopplungsgleichung in Abhängigkeit von den Kopplungsvariablen $i_{I,II,k}$ und $v_{II,I,k}$ beschrieben. Jede der Teilschaltungen 5a, 5b wird durch numerisches Lösen der gekoppelten Teil-Zustandsraumdarstellungen 6a, 6b auf einer Recheneinheit 3 berechnet.

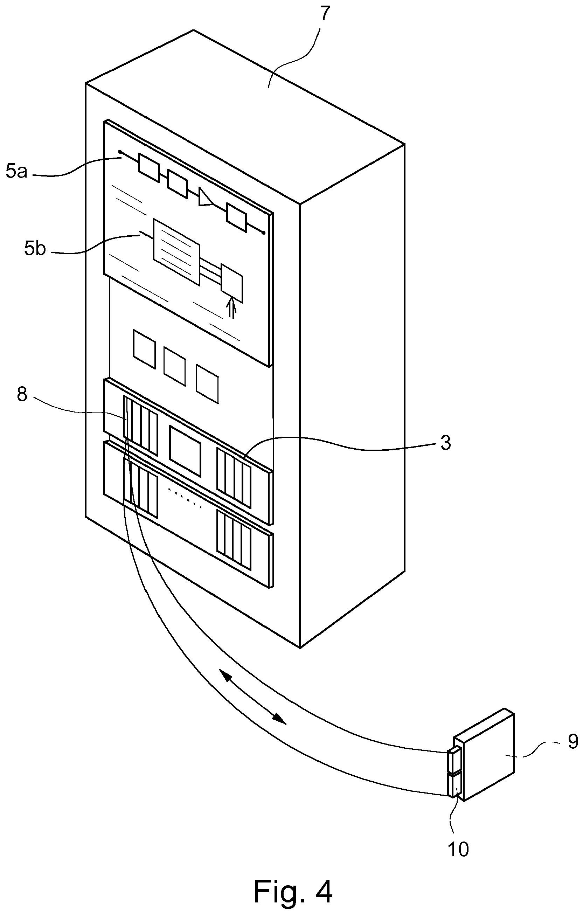

In Fig. 4 ist eine typische Umgebung dargestellt, in der das Verfahren 1 zur Simulation der elektrischen Gesamtschaltung 2 bzw. der Teilschaltungen 5a, 5b durchgeführt wird. In diesem Ausführungsbeispiel wird das Verfahren 1 auf einem Simulator 7 ausgeführt, der mehrere Recheneinheiten 3 aufweist. Das Verfahren ließe sich genauso gut mit nur einer einzigen Recheneinheit 3 verwenden. Mit den Recheneinheiten 3 des Simulators 7 werden die Teil-Zustandsraumdarstellungen 6a, 6b, die über Kopplungsvariablen miteinander gekoppelt sind, numerisch mit den Recheneinheiten 3 gelöst. Über I/O-Schnittstellen 8 des Simulators 7 wird ein Teil der berechneten Größen an einem technisch-physikalischen Prozess in Form eines Steuergeräts 9 ausgegeben. Umgekehrt werden auch Reaktionsgrößen des Steuergeräts 9, die über die Steuergeräte-Schnittstelle 10 ausgegeben werden, von dem Simulator 7 über dessen I/O-Schnittstelle 8 eingelesen und der Berechnung innerhalb des Simulators 7 wieder zugrunde gelegt. Die Berechnung der Gesamtschaltung 2 bzw. der Teilschaltungen 5a, 5b auf den Recheneinheiten 3 des Simulators 7 hat also unmittelbare Auswirkungen auf den technisch-physikalischen Prozess in Form des Steuergeräts 9. Der dargestellte Anwendungsfall ist eine HIL-Simulation, wobei das zu testende Gerät (device under test) hier das Steuergerät 9 ist. Die Berechnung der Gesamtschaltung 2 bzw. der Teilschaltung 5a, 5b erfolgt auf den Recheneinheiten 3 in Echtzeit, da der technisch-physikalische Prozess naturgemäß auch "in Echtzeit" arbeitet. Es muss also gewährleistet werden, dass die Gesamtschaltung 2 bzw. die Teilschaltung 5a, 5b mit den vorhandenen Hardware-Ressourcen in Echtzeit berechnet werden kann bzw. berechnet werden können.

Wie eingangs dargelegt worden ist, ist ein bekanntes Mittel zur Lösung dieser Aufgabe die Trennung der Gesamtschaltung 2 in mehrere Teilschaltungen 5a, 5b. Durch die Auftrennung wird die Komplexität (mögliche Schaltungskombinationen) reduziert, sodass eine Echtzeitberechnung auch größerer Schaltungen möglich wird. Problematisch ist, dass nicht jede mögliche Trennung 100 einer Gesamtschaltung 2 in mehrere Teilschaltungen 5a, 5b gleichermaßen geeignet ist, beispielsweise weil unter den gegebenen Randbedingungen - wie der numerischen Berechnungsschrittweite - eine numerisch stabile oder hinreichend schnelle Simulation nicht möglich ist. Wie eingangs beschrieben worden ist, ist es im Stand der Technik üblich, zur Ermittlung der Stabilität der Berechnung von mehreren Teilschaltungen 5a, 5b, die betreffenden Teilschaltungen 5a, 5b bzw. die zugehörigen Teil-Zustandsraumdarstellungen 6a, 6b auf der Recheneinheit 3 oder auf mehreren Recheneinheiten 3 durchzuführen, sodass durch die praktische Durchführung der Simulation ein Erfahrungswert hinsichtlich der Stabilität gewonnen wird. Dieser Erfahrungswert ist im Zweifelsfall jedoch nicht zuverlässig, da sich Stabilitätsaussagen beispielsweise erst bei einer längeren Simulation herausstellen oder die durchgeführte Simulation nicht alle möglichen Schaltkombinationen abdeckt.

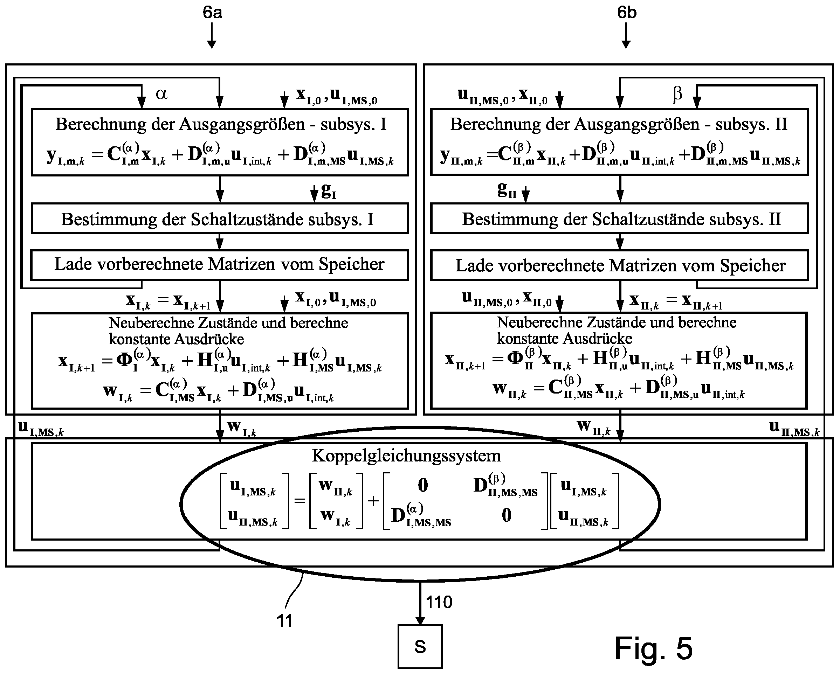

In den Figuren ab Fig. 5 ist dargestellt, wie diesem Problem begegnet wird. Fig. 5 zeigt im oberen Bereich zunächst die Handhabung der Teil-Zustandsraumdarstellung 6a, 6b, die dem Prinzip nach der Handhabung der Gesamt-Zustandsraumdarstellung 4 entspricht, wie sie in Fig. 2c dargestellt ist. Etwas ausführlicher formuliert lauten die Teil-Zustandsraumdarstellungen 6a, 6b wie folgt für die Teilschaltungen I, 5a (Gleichung 3)

$$\mathbf{x}_{\mathrm{I},k+1}=\mathbf{\Phi}_{\mathrm{I}}^{(\alpha)}\mathbf{x}_{\mathrm{I},k}+\begin{bmatrix}\mathbf{H}_{\mathrm{I,u}}^{(\alpha)} & \mathbf{H}_{\mathrm{I,MS}}^{(\alpha)}\end{bmatrix}\begin{bmatrix}\mathbf{u}_{\mathrm{I,int},k}\\\mathbf{u}_{\mathrm{I,MS},k}\end{bmatrix},\quad\begin{bmatrix}\mathbf{y}_{\mathrm{I,m},k}\\\mathbf{y}_{\mathrm{I,MS},k}\end{bmatrix}=\begin{bmatrix}\mathbf{C}_{\mathrm{dI,m}}^{(\alpha)}\\\mathbf{C}_{\mathrm{dI,MS}}^{(\alpha)}\end{bmatrix}\mathbf{x}_{\mathrm{I},k}+\begin{bmatrix}\mathbf{D}_{\mathrm{dI,m,u}}^{(\alpha)} & \mathbf{D}_{\mathrm{dI,m,MS}}^{(\alpha)}\\\mathbf{D}_{\mathrm{dI,MS,u}}^{(\alpha)} & \mathbf{D}_{\mathrm{dI,MS,MS}}^{(\alpha)}\end{bmatrix}\begin{bmatrix}\mathbf{u}_{\mathrm{I,int},k}\\\mathbf{u}_{\mathrm{I,MS},k}\end{bmatrix}$$

und für die Teilschaltung II, 5b (Gleichung 4)

$$\mathbf{x}_{\mathrm{II},k+1}=\mathbf{\Phi}_{\mathrm{II}}^{(\beta)}\mathbf{x}_{\mathrm{II},k}+\begin{bmatrix}\mathbf{H}_{\mathrm{II,u}}^{(\beta)} & \mathbf{H}_{\mathrm{II,MS}}^{(\beta)}\end{bmatrix}\begin{bmatrix}\mathbf{u}_{\mathrm{II,int},k}\\\mathbf{u}_{\mathrm{II,MS},k}\end{bmatrix},\quad\begin{bmatrix}\mathbf{y}_{\mathrm{II,m},k}\\\mathbf{y}_{\mathrm{II,MS},k}\end{bmatrix}=\begin{bmatrix}\mathbf{C}_{\mathrm{dII,m}}^{(\beta)}\\\mathbf{C}_{\mathrm{dII,MS}}^{(\beta)}\end{bmatrix}\mathbf{x}_{\mathrm{II},k}+\begin{bmatrix}\mathbf{D}_{\mathrm{dII,m,u}}^{(\beta)} & \mathbf{D}_{\mathrm{dII,m,MS}}^{(\beta)}\\\mathbf{D}_{\mathrm{dII,MS,u}}^{(\beta)} & \mathbf{D}_{\mathrm{dII,MS,MS}}^{(\beta)}\end{bmatrix}\begin{bmatrix}\mathbf{u}_{\mathrm{II,int},k}\\\mathbf{u}_{\mathrm{II,MS},k}\end{bmatrix}.$$

Der Index I steht hier für die erste Teilschaltung 5a, und der Index II steht für die Teilschaltung 5b. Die Eingänge der Teilschaltungen 5a, 5b bzw. deren Teil-Zustandsraumdarstellungen 6a, 6b sind entweder willkürliche Eingänge $\mathbf{u}_{\mathrm{I,int},k}$; $\mathbf{u}_{\mathrm{II,int},k}$ (typischerweise sind dies von der Trennung der Gesamtschaltung 2 unabhängige Quellen innerhalb der Teilschaltung) oder Eingänge $\mathbf{u}_{\mathrm{I,MS},k}$; $\mathbf{u}_{\mathrm{II,MS},k}$, die in Zusammenhang mit der Trennstelle stehen. Genauso teilt sich der Ausgangsvektor auf in beliebige Ausgänge $\mathbf{y}_{\mathrm{I,m},k}$; $\mathbf{y}_{\mathrm{II,m},k}$, die nicht in Zusammenhang stehen mit der Auftrennung der Gesamtschaltung 2 und Ausgänge $\mathbf{y}_{\mathrm{I,MS},k}$; $\mathbf{y}_{\mathrm{II,MS},k}$, die in Zusammenhang stehen mit der Trennstelle. Die Hochindizes $\alpha$ und $\beta$ bezeichnen die Schaltzustände innerhalb der Teilschaltung 5a, 5b.

Anhand der Darstellung in den Gleichungen 3 und 4 ist auch ersichtlich, wie die Gleichungssysteme miteinander gekoppelt sind über die Eingänge und Ausgänge an einem Trennpunkt der Gesamtschaltung 2, denn es gilt (Gleichung 5):

$$\mathbf{u}_{\mathrm{II,MS},k}=\mathbf{y}_{\mathrm{I,MS},k}\quad\text{und}\quad\mathbf{u}_{\mathrm{I,MS},k}=\mathbf{y}_{\mathrm{II,MS},k}.$$

Mit dem aufgezeigten Zusammenhang der Kopplung der beiden Teilschaltungen 5a, 5b über die Koppelgrößen (Gleichung 5) folgt eine gleichungsmäßige Beschreibung der Teilschaltungen 5a, 5b durch die folgenden Teil-Zustandsraumdarstellungen 6a, 6b, nämlich für die Teilschaltung 5a (Gleichung 6)

$$\mathbf{x}_{\mathrm{I},k+1}=\mathbf{\Phi}_{\mathrm{I}}^{(\alpha)}\mathbf{x}_{\mathrm{I},k}+\mathbf{H}_{\mathrm{I,u}}^{(\alpha)}\mathbf{u}_{\mathrm{I,int},k}+\mathbf{H}_{\mathrm{I},i,\mathrm{MS}}^{(\alpha)}\mathbf{u}_{\mathrm{I,MS},k},\quad\mathbf{y}_{\mathrm{I,m},k}=\mathbf{C}_{\mathrm{dI,m}}^{(\alpha)}\mathbf{x}_{\mathrm{I},k}+\mathbf{D}_{\mathrm{dI,m,u}}^{(\alpha)}\mathbf{u}_{\mathrm{I,int},k}+\mathbf{D}_{\mathrm{dI,m,MS}}^{(\alpha)}\mathbf{u}_{\mathrm{I,MS},k}$$

$$\mathbf{y}_{\mathrm{I,MS},k}=\mathbf{u}_{\mathrm{II,MS},k}=\mathbf{C}_{\mathrm{dI,MS}}^{(\alpha)}\mathbf{x}_{\mathrm{I},k}+\mathbf{D}_{\mathrm{dI,MS,u}}^{(\alpha)}\mathbf{u}_{\mathrm{I,int},k}+\mathbf{D}_{\mathrm{dI,MS,MS}}^{(\alpha)}\mathbf{u}_{\mathrm{I,MS},k}$$

und für die Teilschaltung 5b (Gleichung 7)

$$\mathbf{x}_{\mathrm{II},k+1}=\mathbf{\Phi}_{\mathrm{II}}^{(\beta)}\mathbf{x}_{\mathrm{II},k}+\mathbf{H}_{\mathrm{II,u}}^{(\beta)}\mathbf{u}_{\mathrm{II,int},k}+\mathbf{H}_{\mathrm{II,MS}}^{(\beta)}\mathbf{u}_{\mathrm{II,MS},k},\quad\mathbf{y}_{\mathrm{II,m},k}=\mathbf{C}_{\mathrm{dII,m}}^{(\beta)}\mathbf{x}_{\mathrm{II},k}+\mathbf{D}_{\mathrm{dII,m,u}}^{(\beta)}\mathbf{u}_{\mathrm{II,int},k}+\mathbf{D}_{\mathrm{dII,m,MS}}^{(\beta)}\mathbf{u}_{\mathrm{II,MS},k}$$

$$\mathbf{y}_{\mathrm{II,MS},k}=\mathbf{u}_{\mathrm{I,MS},k}=\mathbf{C}_{\mathrm{dII,MS}}^{(\beta)}\mathbf{x}_{\mathrm{II},k}+\mathbf{D}_{\mathrm{dII,MS,u}}^{(\beta)}\mathbf{u}_{\mathrm{II,int},k}+\mathbf{D}_{\mathrm{dII,MS,MS}}^{(\beta)}\mathbf{u}_{\mathrm{II,MS},k}$$

Aus den Beziehungen hinsichtlich der Ausganggrößen in den Gleichungen 6 und 7 lässt sich nun ein Koppelgleichungssystem 11 ableiten (Gleichung 8, Fig. 5):

$$\begin{bmatrix}\mathbf{u}_{\mathrm{I,MS},k}\\\mathbf{u}_{\mathrm{II,MS},k}\end{bmatrix}=\begin{bmatrix}\mathbf{w}_{\mathrm{II},k}\\\mathbf{w}_{\mathrm{I},k}\end{bmatrix}+\begin{bmatrix}\mathbf{0}&\mathbf{D}_{\mathrm{dII,MS,MS}}^{(\beta)}\\\mathbf{D}_{\mathrm{dI,MS,MS}}^{(\alpha)}&\mathbf{0}\end{bmatrix}\begin{bmatrix}\mathbf{u}_{\mathrm{I,MS},k}\\\mathbf{u}_{\mathrm{II,MS},k}\end{bmatrix}$$

$$\mathbf{w}_{\mathrm{I},k}=\mathbf{C}_{\mathrm{dI,MS}}^{(\alpha)}\mathbf{x}_{\mathrm{I},k}+\mathbf{D}_{\mathrm{dI,MS,u}}^{(\alpha)}\mathbf{u}_{\mathrm{I,int},k}\ \text{ and }\ \mathbf{w}_{\mathrm{II},k}=\mathbf{C}_{\mathrm{dII,MS}}^{(\beta)}\mathbf{x}_{\mathrm{II},k}+\mathbf{D}_{\mathrm{dII,MS,u}}^{(\beta)}\mathbf{u}_{\mathrm{II,int},k}\ .$$

Das Koppelgleichungssystem 11 beschreibt den Austausch der berechneten Kopplungsvariablen zwischen den Teilschaltungen 5a, 5b.

Auf Grundlage des Koppelgleichungssystems 11 wird dann in einem Bewertungsschritt 110 ein Stabilitätsparameter S berechnet, der aufgrund theoretischer Überlegungen eine fundierte Beurteilung der Stabilität der Berechnung der gekoppelten Teil-Zustandsraumdarstellung 6a, 6b ermöglicht. Es muss also keine Simulation der Teil-Zustandsraumdarstellungen 6a, 6b durchgeführt werden, der Stabilitätsparameter S basiert auf systemtheoretischen und/oder numerischen Stabilitätskriterien auf Grundlage des Koppelgleichungssystems 11.

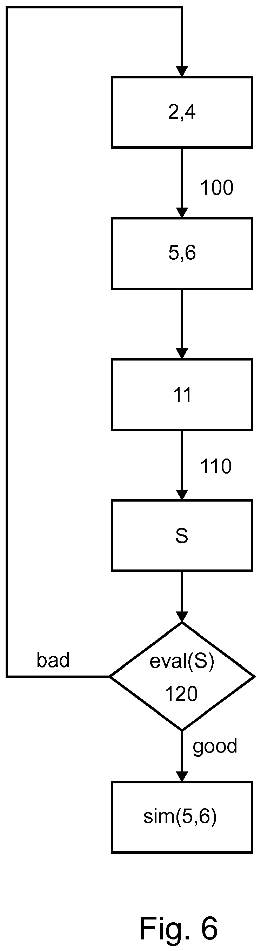

In Fig. 6 sind der bisherige Verfahrensverlauf und auch weitere Verfahrensschritte in einem Diagramm dargestellt. Ausgangspunkt ist die elektrische Gesamtschaltung 2 und deren Gesamt-Zustandsraumdarstellung 4. In einem Trennungsschritt 100 wird eine Trennung der Gesamtschaltung 2 in Teilschaltungen 5 vorgenommen, die durch Teil-Zustandsraumdarstellungen 6 mathematisch beschrieben werden. Zunächst wird ein Koppelgleichungssystem 11 formuliert, das die Kopplung der Teil-Zustandsraumdarstellungen 6 abbildet. In einem darauffolgenden Bewertungsschritt 110 wird auf Grundlage des Koppelgleichungssystems 11 dann wenigstens ein Stabilitätsparameter S berechnet, beispielsweise in Form von Eigenwerten, der Berechnung der Konditionszahl (bei direkten numerischen Lösungen) usw.

In einem Auswahlschritt 120 wird dann in Abhängigkeit von dem berechneten Stabilitätsparameter S entschieden, ob die vorliegende Zerlegung der Gesamtschaltung 2 in Teilschaltungen 5 der Simulation zugrunde gelegt wird oder nicht. In diesem Auswahlschritt 120 wird also der Stabilitätsparameter S selbst bewertet, wobei grundsätzlich instabile Lösungen keine Grundlage für eine weitere Simulation sein können, sofern das ungetrennte System stabil war. Aber auch stabile Trennungen der Gesamtschaltung können bei dem Auswahlschritt 120 verworfen werden, wenn sich beispielsweise herausstellt, dass eine Trennung zwar grundsätzlich zu stabilen Ergebnissen führt, aber die Berechnung nicht hinreichend schnell konvergiert. Wenn eine Trennung als nicht geeignet erscheint, ist die übliche Vorgehensweise, dass auf Grundlage der Gesamtschaltung 2 eine andere Trennung der Gesamtschaltung 2 erprobt und bewertet wird, in Fig. 6 gekennzeichnet durch den "bad"-Zweig im Auswahlschritt 120 nach der Auswertung eval(S).

Genügt der Stabilitätsparameter S der Bewertung im Auswahlschritt 120, wird die getroffene Trennung zur Grundlage der weiteren Simulation auf einer Recheneinheit 3 gemacht (sim(5, 6)).

Die Berechnung des Stabilitätsparameters S kann unterschiedlich erfolgen. Im Falle der direkten numerischen Lösung des Koppelgleichungssystems 11, z. B. durch Anwendung des Gaußverfahrens mittels LU-Zerlegung, wird als Stabilitätsparameter S die Konditionszahl $\kappa$ des Koppelgleichungssystems 11 berechnet. Es wird damit das aus dem Koppelgleichungssystem 11 (Gleichung 8) resultierende Gleichungssystem (Gleichung 9) gelöst:

$$\begin{bmatrix}\mathbf{I}&-\mathbf{D}_{\mathrm{dII,MS,MS}}^{(\beta)}\\-\mathbf{D}_{\mathrm{dI,MS,MS}}^{(\alpha)}&\mathbf{I}\end{bmatrix}\begin{bmatrix}\mathbf{u}_{\mathrm{I,MS},k}\\\mathbf{u}_{\mathrm{II,MS},k}\end{bmatrix}=\begin{bmatrix}\mathbf{w}_{\mathrm{II},k}\\\mathbf{w}_{\mathrm{I},k}\end{bmatrix}$$

Die Konditionszahl $\kappa$ ist eine Größe, die gleichermaßen die Konvergenzgeschwindigkeit und damit die Stabilität der Berechnung beschreibt wie auch die Genauigkeit der Berechnung.

Nachteilig bei Verwendung direkter numerischer Lösungsverfahren ist der Umstand, dass in erheblichem Umfang Divisionen durchgeführt werden müssen, die auf FPGAs (Field Programmable Gate Array) extrem zeit- und ressourcenintensiv sind. Wird die Simulation auf FPGA-Basis durchgeführt, eignet sich daher eher die Verwendung eines iterativen numerischen Lösungsverfahrens ohne Division zur Behandlung des Koppelgleichungssystems 11, beispielsweise durch Fixpunktiteration. Dazu wird das Koppelgleichungssystem 11 zunächst als Fixpunktgleichung formuliert, also auf die Form x = f(x) als Iterationsvorschrift gebracht (Gleichung 10):

$$\begin{bmatrix} \mathbf{u}_{\mathrm{I,MS},k,p+1} \\ \mathbf{u}_{\mathrm{II,MS},k,p+1} \end{bmatrix} = \begin{bmatrix} \mathbf{w}_{\mathrm{II},k} \\ \mathbf{w}_{\mathrm{I},k} \end{bmatrix} + \begin{bmatrix} \mathbf{0} & \mathbf{D}_{\mathrm{dII,MS,MS}}^{(\beta)} \\ \mathbf{D}_{\mathrm{dI,MS,MS}}^{(\alpha)} & \mathbf{0} \end{bmatrix} \begin{bmatrix} \mathbf{u}_{\mathrm{I,MS},k,p} \\ \mathbf{u}_{\mathrm{II,MS},k,p} \end{bmatrix}, \qquad \begin{bmatrix} \mathbf{u}_{\mathrm{I,MS},k,0} \\ \mathbf{u}_{\mathrm{II,MS},k,0} \end{bmatrix} = \begin{bmatrix} \mathbf{u}_{\mathrm{I,MS},k-1} \\ \mathbf{u}_{\mathrm{II,MS},k-1} \end{bmatrix}.$$

p bezeichnet in Gleichung 10 den Iterationsschritt. Zur Beurteilung der Stabilität und Konvergenzgeschwindigkeit der Fixpunktiteration bietet sich die Bestimmung des Spektralradius $\rho$ als Stabilitätsparameter S an (Gleichung 11):

$$\rho = \max\left\{\left|\mathbf{eig}(\mathbf{J})\right|\right\} \quad, \qquad \mathbf{J} = \begin{bmatrix} \mathbf{0} & \mathbf{D}_{\mathrm{dII,MS,MS}}^{(\beta)} \\ \mathbf{D}_{\mathrm{dI,MS,MS}}^{(\alpha)} & \mathbf{0} \end{bmatrix}.$$

Die Eigenwerte der aus dem Koppelgleichungssystem 11 resultierenden Matrix J können auch einer anderen geeigneten Bewertung unterzogen werden.

Bei einer anderen Ausgestaltung des Verfahrens 1 werden in die Koppelgleichungen des Koppelgleichungssystems 11 zusätzliche Totzeiten aufgenommen, um implizite Kopplungen zu vermeiden. Dann wird aus dem Koppelgleichungssystem 11 aus Gleichung 8 die folgende Gleichung 12:

$$\begin{bmatrix} \mathbf{u}_{\mathrm{I,MS},k} \\ \mathbf{u}_{\mathrm{II,MS},k} \end{bmatrix} = \begin{bmatrix} \mathbf{w}_{\mathrm{II},k} \\ \mathbf{w}_{\mathrm{I},k} \end{bmatrix} + \begin{bmatrix} \mathbf{0} & \vdots & \mathbf{D}_{\mathrm{dII,MS,MS}}^{(\beta)} \\ \mathbf{D}_{\mathrm{dI,MS,MS}}^{(\alpha)} & \vdots & \mathbf{0} \end{bmatrix} \begin{bmatrix} \mathbf{u}_{\mathrm{I,MS},k-1} \\ \mathbf{u}_{\mathrm{II,MS},k-1} \end{bmatrix}.$$

Auf der rechten Seite der Gleichung 8 sind die Kopplungsvariablen $\mathbf{u}_{\mathrm{I,MS,k}}$, $\mathbf{u}_{\mathrm{II,MS,k}}$ zum Zeitpunkt k ersetzt worden durch die Kopplungsvariablen zum Zeitpunkt k-1, also $\mathbf{u}_{\mathrm{I,MS,k-1}}$ und $\mathbf{u}_{\mathrm{II,MS,k-1}}$. Die dadurch entstehende Gleichung 12 wird damit zu einer reinen Bestimmungsgleichung für die Kopplungsvariablen zum Zeitpunkt k, denn die Kopplungsvariablen zum Zeitpunkt k-1 sind ja bekannt; das aufwendige implizite numerische Lösen entfällt also. Die Totzeiten werden hier an den Trennstellen vorgesehen, also an den Schaltungszweigen der Gesamtschaltung 2, die im Trennungsschritt 100 aufgetrennt worden sind. An den Trennungsstellen werden die Kopplungsvariablen um einen Berechnungsschritt verzögert, was in der zeitdiskreten Formulierung der Zustandsraumdarstellungen einfach möglich ist. Wie im allgemeinen Beschreibungsteil erläutert, kann diese Maßnahme auch eine tatsächliche physikalische Entsprechung haben, nämlich die beispielsweise die Übertragungszeit für die Kopplungsvariablen von einer Recheneinheit auf eine andere Recheneinheit. Es gilt dann beispielsweise (Gleichung 13; vergleiche mit der Formulierung in Gleichung 5):

$$\mathbf{u}_{\mathrm{II, MS, k}} = \mathbf{y}_{\mathrm{I, MS, k-1}} \quad \text{und} \quad \mathbf{u}_{\mathrm{I, MS, k}} = \mathbf{y}_{\mathrm{II, MS, k-1}}.$$

Wenn der Vorteil der Überführung des Koppelgleichungssystem 11 von einem impliziten mathematischen Zusammenhang in einen expliziten mathematischen Zusammenhang beibehalten werden soll, der Effekt der zusätzlichen Totzeit bei der reinen Ersetzung von $\mathbf{u}_{\mathrm{I,MS,k}}$, $\mathbf{u}_{\mathrm{II,MS,k}}$ zum Zeitpunkt k durch $\mathbf{u}_{\mathrm{I,MS,k-1}}$ und $\mathbf{u}_{\mathrm{II,MS,k-1}}$ zum Zeitpunkt k-1 aber vermieden oder zumindest abgeschwächt werden soll, dann werden $\mathbf{u}_{\mathrm{I,MS,k}}$, $\mathbf{u}_{\mathrm{II,MS,k}}$ durch vernünftige Schätzwerte beruhend auf alten Werten der Kopplungsvariablen ersetzt. Bei einer Ausgestaltung ist vorgesehen, dass die Kopplungsvariablen in einem Berechnungsschritt k berechnet werden durch eine Extrapolation mehrerer vorangegangener Werte dieser Kopplungsvariablen in vergangenen Berechnungsschritten (k-1, k-2, ...). In einem einfachen Fall ist die Extrapolation eine lineare Fortsetzung der vergangenen beiden Werte der Kopplungsvariablen zu den Zeitpunkten k-1 und k-2. Bei einer Weiterbildung dieses Verfahrens wird die beschriebene Extrapolation ausgesetzt, wenn Schaltereignisse in der elektrischen Gesamtschaltung auftreten, da sich dann Ströme und Spannungen sehr schnell ändern können. Die (lineare) Fortführung der Kopplungsgrößen kann dann eine erhebliche Abweichung von dem tatsächlichen Verlauf der Kopplungsgrößen haben, so dass in diesem Fall - für einen oder einige wenige Berechnungsschritte - wieder das implizite Kopplungsgleichungssystem mit einem impliziten numerischen Verfahren berechnet wird.

Es ist einleuchtend, dass durch diese Maßnahme zusätzliche Zustandsgleichungen entstehen, sodass eine erweiterte Formulierung der Teil-Zustandsraumdarstellungen 6a, 6b resultiert, nämlich Gleichung 14 für die erste Teilschaltung 5a

$$\begin{bmatrix} \mathbf{x}_{\mathrm{I},k+1} \\ \mathbf{y}_{\mathrm{I,MS},k} \end{bmatrix} = \begin{bmatrix} \boldsymbol{\Phi}_{\mathrm{I}}^{(\alpha)} & \mathbf{0} \\ \mathbf{C}_{\mathrm{dI,MS}}^{(\alpha)} & \mathbf{0} \end{bmatrix} \begin{bmatrix} \mathbf{x}_{\mathrm{I},k} \\ \mathbf{y}_{\mathrm{I,MS},k-1} \end{bmatrix} + \begin{bmatrix} \mathbf{H}_{\mathrm{I,u}}^{(\alpha)} \\ \mathbf{D}_{\mathrm{dI,MS,u}}^{(\alpha)} \end{bmatrix} \mathbf{u}_{\mathrm{I,int},k} + \begin{bmatrix} \mathbf{H}_{\mathrm{I,MS}}^{(\alpha)} \\ \mathbf{D}_{\mathrm{dI,MS,MS}}^{(\alpha)} \end{bmatrix} \mathbf{u}_{\mathrm{I,MS},k} \quad ,$$

$$\begin{bmatrix} \mathbf{y}_{\mathrm{I,m},k} \\ \mathbf{y}_{\mathrm{I,MS},k-1} \end{bmatrix} = \begin{bmatrix} \mathbf{C}_{\mathrm{dI,m}}^{(\alpha)} & \mathbf{0} \\ \mathbf{0} & \mathbf{I} \end{bmatrix} \begin{bmatrix} \mathbf{x}_{\mathrm{I},k} \\ \mathbf{y}_{\mathrm{I,MS},k-1} \end{bmatrix} + \begin{bmatrix} \mathbf{D}_{\mathrm{dI,m,u}}^{(\alpha)} \\ \mathbf{0} \end{bmatrix} \mathbf{u}_{\mathrm{I,int},k} + \begin{bmatrix} \mathbf{D}_{\mathrm{dI,m,MS}}^{(\alpha)} \\ \mathbf{0} \end{bmatrix} \mathbf{u}_{\mathrm{I,MS},k} \quad ,$$

und Gleichung 15 für die zweite Teilschaltung 5b

$$\begin{bmatrix} \mathbf{x}_{\mathrm{II},k+1} \\ \mathbf{y}_{\mathrm{II,MS},k} \end{bmatrix} = \begin{bmatrix} \boldsymbol{\Phi}_{\mathrm{II}}^{(\beta)} & \mathbf{0} \\ \mathbf{C}_{\mathrm{dII,MS}}^{(\beta)} & \mathbf{0} \end{bmatrix} \begin{bmatrix} \mathbf{x}_{\mathrm{II},k} \\ \mathbf{y}_{\mathrm{II,MS},k-1} \end{bmatrix} + \begin{bmatrix} \mathbf{H}_{\mathrm{II,u}}^{(\beta)} \\ \mathbf{D}_{\mathrm{dII,MS,u}}^{(\beta)} \end{bmatrix} \mathbf{u}_{\mathrm{II,int},k} + \begin{bmatrix} \mathbf{H}_{\mathrm{II,MS}}^{(\beta)} \\ \mathbf{D}_{\mathrm{dII,MS,MS}}^{(\beta)} \end{bmatrix} \mathbf{u}_{\mathrm{II,MS},k} \quad ,$$

$$\begin{bmatrix} \mathbf{y}_{\mathrm{II,m},k} \\ \mathbf{y}_{\mathrm{II,MS},k-1} \end{bmatrix} = \begin{bmatrix} \mathbf{C}_{\mathrm{dII,m}}^{(\beta)} & \mathbf{0} \\ \mathbf{0} & \mathbf{I} \end{bmatrix} \begin{bmatrix} \mathbf{x}_{\mathrm{II},k} \\ \mathbf{y}_{\mathrm{II,MS},k-1} \end{bmatrix} + \begin{bmatrix} \mathbf{D}_{\mathrm{dII,m,u}}^{(\beta)} \\ \mathbf{0} \end{bmatrix} \mathbf{u}_{\mathrm{II,int},k} + \begin{bmatrix} \mathbf{D}_{\mathrm{dII,m,MS}}^{(\beta)} \\ \mathbf{0} \end{bmatrix} \mathbf{u}_{\mathrm{II,MS},k} \quad .$$

Aus den Teil-Zustandsraumdarstellungen 6a, 6b (Gleichungen 14 und 15) und den durch die aufgenommenen Totzeiten erweiterten Koppelgleichungen des Koppelgleichungssystems 11 wird eine zusammengesetzte Gesamt-Zustandsraumdarstellung (nicht zu verwechseln mit der nicht-zusammengesetzten Gesamt-Zustandsraumdarstellung 4) gebildet und als Stabilitätsparameter S werden die Eigenwerte der zusammengesetzten Gesamt-Zustandsraumdarstellung ermittelt. Die zusammengesetzte Gesamt-Zustandsraumdarstellung sieht dann wie folgt aus (Gleichung 16):

$$\begin{bmatrix} \mathbf{x}_{\mathrm{I},k+1} \\ \mathbf{x}_{\mathrm{II},k+1} \\ \mathbf{y}_{\mathrm{I,MS},k} \\ \mathbf{y}_{\mathrm{II,MS},k} \end{bmatrix} = \underbrace{\begin{bmatrix} \boldsymbol{\Phi}_{\mathrm{I}}^{(\alpha)} & \mathbf{0} & \mathbf{0} & \mathbf{H}_{\mathrm{I,MS}}^{(\alpha)} \\ \mathbf{0} & \boldsymbol{\Phi}_{\mathrm{II}}^{(\beta)} & \mathbf{H}_{\mathrm{II,MS}}^{(\beta)} & \mathbf{0} \\ \mathbf{C}_{\mathrm{dI,MS}}^{(\alpha)} & \mathbf{0} & \mathbf{0} & \mathbf{D}_{\mathrm{dI,MS,MS}}^{(\alpha)} \\ \mathbf{0} & \mathbf{C}_{\mathrm{dII,MS}}^{(\beta)} & \mathbf{D}_{\mathrm{dII,MS,MS}}^{(\beta)} & \mathbf{0} \end{bmatrix}}_{\boldsymbol{\Phi}_G} \begin{bmatrix} \mathbf{x}_{\mathrm{I},k} \\ \mathbf{x}_{\mathrm{II},k} \\ \mathbf{y}_{\mathrm{I,MS},k-1} \\ \mathbf{y}_{\mathrm{II,MS},k-1} \end{bmatrix} + \underbrace{\begin{bmatrix} \mathbf{H}_{\mathrm{I,u}}^{(\alpha)} & \mathbf{0} \\ \mathbf{0} & \mathbf{H}_{\mathrm{II,u}}^{(\beta)} \\ \mathbf{D}_{\mathrm{dI,MS,u}}^{(\alpha)} & \mathbf{0} \\ \mathbf{0} & \mathbf{D}_{\mathrm{dII,MS,u}}^{(\beta)} \end{bmatrix}}_{\mathbf{H}_G} \begin{bmatrix} \mathbf{u}_{\mathrm{I,int},k} \\ \mathbf{u}_{\mathrm{II,int},k} \end{bmatrix} \quad .$$

Die ermittelten Eigenwerte der zusammengesetzten Gesamt-Zustandsraumdarstellung können an sich als Stabilitätsparameter S verwendet werden. Bei einer besonderen Ausgestaltung des Verfahrens 1 ist vorgesehen, dass zusätzlich die Eigenwerte der nicht-zusammengesetzten Gesamt-Zustandsraumdarstellung 4 der ungetrennten Gesamtschaltung 2 bestimmt werden und als summarischer Stabilitätsparameter S ein Summenabstandsmaß $\varepsilon$ der minimalen Eigenwertdifferenzen zwischen den Eigenwerten der zusammengesetzten Gesamt-Zustandsraumdarstellung und der nicht-zusammengesetzten Gesamt-Zustandsraumdarstellung 4 berechnet wird (Gleichung 17):

$$\varepsilon = \sum_{\alpha,\beta} \sum_{j=1}^{m} \min_i \left\{ \left| \widetilde{\lambda}_j - \overline{\lambda}_i \right| \right\}, \quad \overline{\lambda}_i = \begin{cases} \lambda_i & 0 < i \le n \\ 0 & , n < i \le m \end{cases} \quad .$$

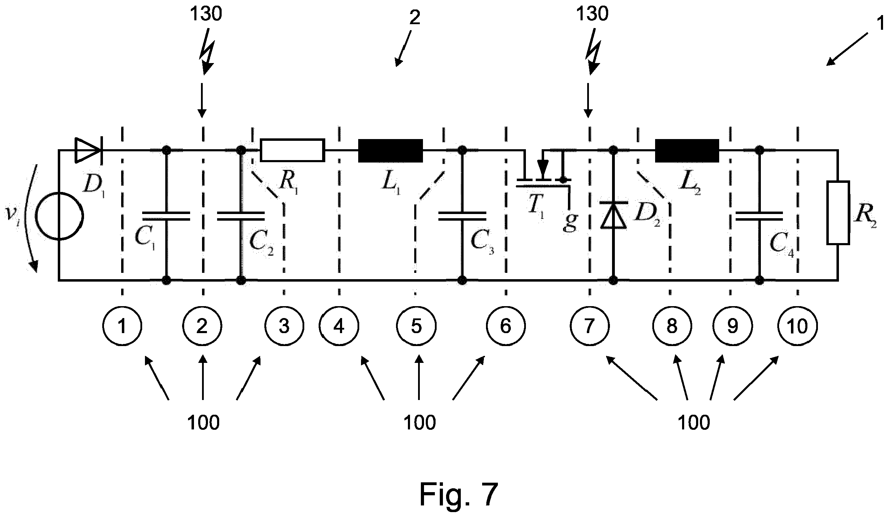

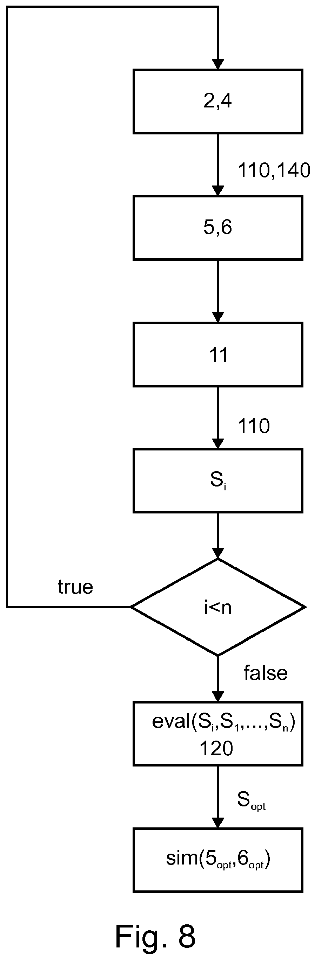

Fig. 7 zeigt, dass die Gesamtschaltung 2 in mehreren Trennungsschritten 100 in mehrere verschiedene Teilschaltungsvarianten aus zwei Teilschaltungen zerlegt wird. Darauf beruht die in Fig. 8 dargestellte Verfahrensweise. Für jede der verschiedenen Teilschaltungsvarianten beruhend auf einem anderen Trennungsschritt 100 wird in einem Bewertungsschritt 110 wenigstens ein Stabilitätsparameter $S_i$ berechnet, sodass eine Mehrzahl von Stabilitätsparametern $S_i$, $S_1$, $S_2$, $S_n$ resultiert. In dem Auswahlschritt 120 wird in Abhängigkeit von der Mehrzahl der berechneten Stabilitätsparameter $S_i$, hier durch Vergleich der Mehrzahl berechneter Stabilitätsparameter $S_i$, der beste Stabilitätsparameter $S_{opt}$ ermittelt und damit die am besten geeignete Zerlegung der Gesamtschaltung 2 ausgewählt, womit auch die am besten geeigneten Teilschaltungen $5_{opt}$ und die am besten geeigneten Teil-Zustandsraumdarstellungen $6_{opt}$ bekannt sind. Auf deren Grundlage wird dann eine Simulation durchgeführt (sim($5_{opt}$, $6_{opt}$)).

In Fig. 7 ist ferner gezeigt, dass in einem Detektionsschritt 130 zur Detektion abhängiger Schaltungskomponenten in der Gesamtschaltung 2 die direkt voneinander abhängigen Zustandsgrößen der Gesamtschaltung 2 und damit die linear abhängigen Schaltungskomponenten ermittelt werden. In der dargestellten Gesamtschaltung 2 sind die parallel geschalteten Kondensatoren $C_1$ und $C_2$ abhängig voneinander bzw. haben gemeinsame Klemmenspannung. In diesem Fall werden in einem Trennungsausschlussschritt 140 - siehe Fig. 8 - die Schaltungszweige zwischen den abhängigen Schaltungskomponenten $C_1$, $C_2$ als Orte möglicher Trennungen der Gesamtschaltung 2 ausgeschlossen, wobei in dem nachfolgenden Trennungsschritt 100 die Schaltungszweige ausgenommen werden, die im Trennungsausschlussschritt 140 als Orte möglicher Trennungen der Gesamtschaltung 2 ausgeschlossen worden sind.

In diesem Zusammenhang zeigt Fig. 7 ferner, dass in dem Detektionsschritt 130 zur Detektion abhängiger Schaltungskomponenten in der Gesamtschaltung 2 abhängige Schaltergruppen ermittelt werden, also diejenigen Schalter D, T, die unmittelbaren Einfluss aufeinander haben. In dem dargestellten Schaltungsbeispiel sind das der MOSFET $T_1$ und die Diode $D_2$. In dem darauffolgenden Trennungsausschlussschritt 140 werden dann wie zuvor die Schaltungszweige zwischen den abhängigen Schaltern der abhängigen Schaltergruppen als Orte einer möglichen Trennung der Gesamtschaltung 2 ausgeschlossen.

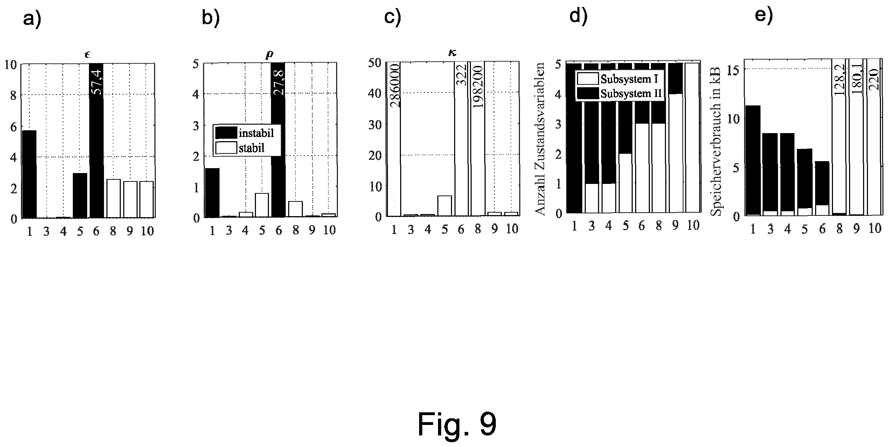

Fig. 9 zeigt die Auswertung der verschiedenen Trennungen der Gesamtschaltung 2 aus Fig. 7. Auf der Abszisse der fünf verschiedenen Diagramme 9a) bis 9e) sind die Trennstellen aufgeführt, wobei die Nummerierung in Fig. 9 der Trennstellennummerierung in Fig. 7 entspricht. Auffällig ist zunächst, dass die im Trennungsausschlussschritt 140 ausgeschlossenen Trennstellen 2 und 7 in der Auswertung gemäß Fig. 9 überhaupt nicht aufgeführt sind, weil es an diesen Stellen zu keiner Auftrennung der Gesamtschaltung 2 gekommen ist.

Fig. 9a) bis 9c) zeigen Auswertungen anhand von verschiedenen Stabilitätsparametern S, die zuvor erläutert worden sind, nämlich anhand des Summenabstandsmaßes $\varepsilon$ (bei Hinzufügen zusätzlicher Totzeiten, FPGA-geeignet, kleinster Summenabstand ist am besten) der minimalen Eigenwertdifferenzen zwischen den Eigenwerten der zusammengesetzten Gesamt-Zustandsraumdarstellung und der nicht-zusammengesetzten Gesamt-Zustandsraumdarstellung, anhand des Spektralradius $\rho$ (Fixpunktiteration, FPGA-geeignet, Stabilität bei Werten kleiner 1) und anhand der Konditionszahl $\kappa$ (numerisch direkte Lösung mit Divisionen, Werte größer gleich 1, kleine Werte bei gut konditionierten Matrizen). Darüber hinaus sind in Fig. 9d) die Verteilung der Zustandsvariablen auf die Teilschaltungen und in Fig. 9e) der Speicherverbrauch je Teilschaltung dargestellt.

Aus der Auswertung lässt sich ablesen, dass Trennung 1 aus Stabilitätsgründen und wegen schlechter Konditionierung vollkommen ungeeignet ist. Die Trennungen 3 und 4 weisen gleichermaßen hervorragende Stabilitäten auf für alle Verfahren. Hier wird aufgrund der einfachen Berechnung der Totzeiten-Variante der Vorzug gegeben. Trennung 5 ist nur unter Verwendung des direkten Verfahrens empfehlenswert; gleichzeitig ist die Verteilung der Zustandsvariablen und der Speicherverbrauch ausgewogen verteilt. Trennung 6 hat zwar eine ausgewogene Zustandsvariablen- und Speicherverteilung, Stabilität liegt aber nur vor für das direkte Verfahren und auch hier ist die Konditionierung nur mäßig. Die Trennungen 8, 9 und 10 sind zwar stabil, aber alle Schalter sind in der linken Teilschaltung vereint, was zu einem unerwünschten Speicherbedarf führt und daher nicht gewollt ist.

Im Folgenden wird ein weiterer Ansatz beschrieben, mit dessen Hilfe der Aufwand für die Berechnung der Gesamtschaltung 2 bzw. der gekoppelten Teil-Zustandsraumdarstellungen 6a, 6b mit dem Koppelgleichungssystem 11 reduziert wird. Der Ansatz beruht zusammenfassend auf der Überlegung, dass die Gesamtschaltung 2 zunächst an solchen Stellen getrennt wird, bei denen kein direkter Durchgriff der entstehenden Koppelgrößen gegeben ist bzw. durch die Trennung entsteht. Im mathematisch kontinuierlichen Fall bedeutet das, dass die Duchgriffsmatrix $\mathbf{D}$ der Teilschaltungen 5a, 5b Null ist bzw. die Elemente der $\mathbf{D}$-Matrix zu Null werden. Dann werden die Zustandsraumdarstellungen der Teilschaltungen 5a, 5b aufgeteilt in einen internen Teil ohne Koppelgrößen, also nur mit internen Zustandsgrößen und gegebenenfalls externen Eingängen, die aber nichts mit den Koppelgrößen zu tun haben, und einen Koppelteil mit den Koppelgrößen als Eingangsgrößen. Der Koppelteil wird dann mit einem expliziten numerischen Verfahren diskretisiert, denn nur in diesem Fall ist gewährleistet, dass auch die diskrete Durchgriffsmatrix $\mathbf{D_d}$ der diskreten Teil-Zustandsraumdarstellungen 6a, 6b bzw. die Elemente der $\mathbf{D_d}$-Matrix Null bleiben. Der interne Teil wird mit einem impliziten numerischen Verfahren diskretisiert und berechnet.

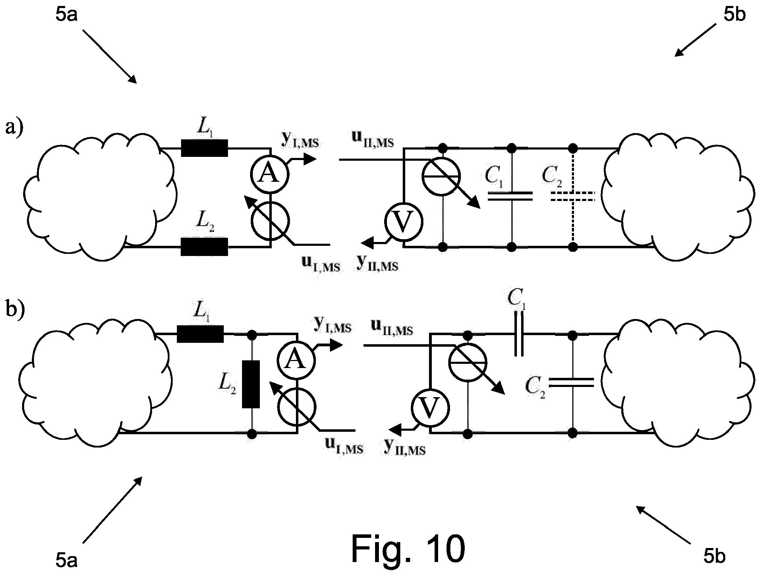

Im Trennungsschritt 100 werden als Ort der Trennung der Gesamtschaltung 2 solche Schaltungszweige ausgewählt, die zu einem kontinuierlichen Koppelgleichungssystem in expliziter mathematischer Form führen, bei dem also kein Durchgriff zwischen den Kopplungsvariablen der Teilschaltungen 5a, 5b existiert. Dies ist dann gegeben, wenn die Kopplungsvariablen der Teilschaltungen 5a, 5b nur von nicht-sprungfähigen Zustandsgrößen der jeweiligen Teilschaltung 5a, 5b abhängen, also beispielsweise von Strömen in Spulen und/oder von Spannungen an Kondensatoren. Dies ist exemplarisch in Fig. 10 dargestellt. Die in den Fig. 10a und 10b dargestellten Trennungen in die Teilschaltungen 5a und 5b führen zu den gewünschten vereinfachten Zusammenhängen ohne direkten Durchgriff. Die Wolken repräsentieren eine beliebige Restschaltung. In beiden Fällen sind die Spannungen an den Kondensatoren $C_i$ und die Ströme durch die Spulen $L_i$ Zustandsgrößen, sodass in der zeitkontinuierlichen Zustandsraumbeschreibung die Durchgriffsmatrizen Null sind; bei der Diskretisierung mit einem expliziten Verfahren bleibt diese Eigenschaft, wie bereits erwähnt, auch in der zeitdiskreten Beschreibung erhalten.

Nachfolgend wird gezeigt, dass die Teil-Zustandsraumdarstellungen mit den internen Zustandsgrößen der Teilschaltungen 5a, 5b mit einer Kombination aus einem expliziten und einem impliziten numerischen Verfahren gelöst werden.

Im zeitkontinuierlichen Fall lautet die Zustandsraumbeschreibung einer Teilschaltung 5a, 5b, hier durch den Index I angedeutet, wie folgt (Gleichung 18):

$$\dot{\mathbf{x}}_{\mathbf{I}} = \mathbf{A}_{\mathbf{I}}^{(\alpha)}\mathbf{x}_{\mathbf{I}} + \begin{bmatrix} \mathbf{B}_{\mathbf{I},\mathbf{u}}^{(\alpha)} & \mathbf{B}_{\mathbf{I},\mathbf{MS}}^{(\alpha)} \end{bmatrix} \begin{bmatrix} \mathbf{u}_{\mathbf{I},\text{int}} \\ \mathbf{u}_{\mathbf{I},\mathbf{MS}} \end{bmatrix}$$

$$= \mathbf{A}_{\mathbf{I}}^{(\alpha)}\mathbf{x}_{\mathbf{I}} + \mathbf{B}_{\mathbf{I},\mathbf{u}}^{(\alpha)}\mathbf{u}_{\mathbf{I},\text{int}} + \mathbf{B}_{\mathbf{I},\mathbf{MS}}^{(\alpha)}\mathbf{u}_{\mathbf{I},\mathbf{MS}}$$

Die ersten beiden Terme $\mathbf{A}_{\mathbf{I}}^{(\alpha)}\mathbf{x}_{\mathbf{I}} + \mathbf{B}_{\mathbf{I},\mathbf{u}}^{(\alpha)}\mathbf{u}_{\mathbf{I},\text{int}}$ sind der interne Teil der Teil-Zustandsraumdarstellung ohne Koppelgrößen, der verbleibende Term $\mathbf{B}_{\mathbf{I},\mathbf{MS}}^{(\alpha)}\mathbf{u}_{\mathbf{I},\mathbf{MS}}$ ist der Koppelteil der Teil-Zustandsraumdarstellung mit den durch die Schaltungstrennung verursachten Koppelgrößen als Eingangsgrößen (Index MS für "model splitting"), also:

$$\dot{\mathbf{x}}_{\mathbf{I}} = \underbrace{\mathbf{A}_{\mathbf{I}}^{(\alpha)}\mathbf{x}_{\mathbf{I}} + \mathbf{B}_{\mathbf{I},\mathbf{u}}^{(\alpha)}\mathbf{u}_{\mathbf{I},\text{int}}}_{\dot{\mathbf{x}}_{\mathbf{I},\text{int}}} + \underbrace{\mathbf{B}_{\mathbf{I},\mathbf{MS}}^{(\alpha)}\mathbf{u}_{\mathbf{I},\mathbf{MS}}}_{\dot{\mathbf{x}}_{\mathbf{I},\mathbf{MS}}}$$

Für den internen Teil und für den Koppelteil der zeitkontinuierlichen Teil-Zustandsraumdarstellung werden nun verschiedene Diskretisierungsverfahren verwendet, nämlich für den internen Teil ein implizites Diskretisierungsverfahren (z. B. Rückwärts-Euler) und für den Koppelteil ein explizites Diskretisierungsverfahren (z. B. Vorwärts-Euler). Dann lautet die zeitdiskrete Darstellung wie folgt (Gleichung 19):

$$\mathbf{x}_{\mathbf{I},k+1} = \mathbf{x}_{\mathbf{I},k} + T\cdot\left(\gamma\cdot\dot{\mathbf{x}}_{\mathbf{I},\text{int}}\big|_{t_{k+1}} + (1-\gamma)\cdot\dot{\mathbf{x}}_{\mathbf{I},\text{int}}\big|_{t_k} + \dot{\mathbf{x}}_{\mathbf{I},\mathbf{MS}}\big|_{t_k}\right)$$

Hier ist T die Berechnungsschrittweite und mit der Wahl eines Wertes für $\gamma$ kann das jeweilige Diskretisierungsverfahren konfiguriert werden (für $\gamma = 0$, $\gamma = 1/2$ und $\gamma = 1$ Vorwärts-Euler, Tustin und Rückwärts-Euler). Mit der Substitution (Gleichung 20)

$$\mathbf{v}_{\mathbf{I},k+1} = \mathbf{x}_{\mathbf{I},k+1} - \gamma T\mathbf{A}_{\mathbf{I}}^{(\alpha)}\mathbf{x}_{\mathbf{I},k+1} - \gamma T\mathbf{B}_{\mathbf{I},\mathbf{u}}^{(\alpha)}\mathbf{u}_{\mathbf{I},\text{int},k+1}$$

kann die folgende zeitdiskrete Teil-Zustandsraumdarstellung hergeleitet werden (Gleichung 21)

$$\mathbf{v}_{\mathbf{I},k+1} = \left(\mathbf{I} + (1-\gamma)\cdot\mathbf{A}_{\mathbf{I}}^{(\alpha)}\right)\cdot\left(\mathbf{I} - \gamma T\cdot\mathbf{A}_{\mathbf{I}}^{(\alpha)}\right)^{-1}\cdot\mathbf{v}_{\mathbf{I},k}$$

$$+ \left[\left(\gamma T\cdot\left(\mathbf{I}+(1-\gamma)\cdot\mathbf{A}_{\mathbf{I}}^{(\alpha)}\right)\cdot\left(\mathbf{I}-\gamma T\cdot\mathbf{A}_{\mathbf{I}}^{(\alpha)}\right)^{-1}+(1-\gamma)\cdot\mathbf{I}\right)\cdot\mathbf{B}_{\mathbf{I},\mathbf{u}}^{(\alpha)} \;\Big|\; T\cdot\mathbf{B}_{\mathbf{I},\mathbf{MS}}^{(\alpha)}\right]\begin{bmatrix}\mathbf{u}_{\mathbf{I},\text{int},k}\\\mathbf{u}_{\mathbf{I},\mathbf{MS},k}\end{bmatrix}$$

Für die Ausgänge folgt damit (Gleichung 22)

$$\begin{bmatrix}\mathbf{y}_{\mathbf{I},\mathbf{m},k}\\\mathbf{y}_{\mathbf{I},\mathbf{MS},k}\end{bmatrix} = \mathbf{C}_{\mathbf{I}}^{(\alpha)}\left(\mathbf{I}-\gamma T\cdot\mathbf{A}_{\mathbf{I}}^{(\alpha)}\right)^{-1}\cdot\mathbf{v}_{\mathbf{I},k} + \left[\gamma T\cdot\mathbf{C}_{\mathbf{I}}^{(\alpha)}\cdot\left(\mathbf{I}-\gamma T\cdot\mathbf{A}_{\mathbf{I}}^{(\alpha)}\right)^{-1}\cdot\mathbf{B}_{\mathbf{I},\mathbf{u}}^{(\alpha)}+\mathbf{D}_{\mathbf{I},\text{int}}^{(\alpha)} \;\Big|\; \mathbf{D}_{\mathbf{I},\mathbf{MS}}^{(\alpha)}\right]\cdot\begin{bmatrix}\mathbf{u}_{\mathbf{I},\text{int}\,k}\\\mathbf{u}_{\mathbf{I},\mathbf{MS},k}\end{bmatrix}$$

Es ist zu erkennen, dass die Elemente der Durchgriffsmatrix in der zeitkontinuierlichen Darstellung auch in der zeitdiskreten Formulierung erhalten bleiben. Wenn diese Elemente durch die oben aufgezeigte geschickte Auftrennung der Gesamtschaltung in Teilschaltungen zu Null werden, sind sie das auch in der zeitdiskreten Darstellung, wodurch sich die Berechnung erheblich vereinfacht.

Das erfindungsgemäße Verfahren 1 gestattet die Beurteilung der Trennung einer Gesamtschaltung in Teilschaltungen durch Berechnung eines Stabilitätsparameters auf Grundlage eines Koppelgleichungssystems, ohne dass Teilschaltungen simuliert werden müssten. Das Verfahren ist schnell und zuverlässig ohne die Unwägbarkeiten der bekannten Simulationsmethode zur Abschätzung der Stabilität.

Die verschiedenen Kriterien des Trennungsausschlussschrittes 140 zum Ausschluss von Orten möglicher Trennungen der Gesamtschaltung 2 ermöglichen die sichere Extraktion sinnvoller Trennstellen, ohne dass Expertenwissen und Erfahrung erforderlich sind. Alle Verfahrensschritte sind vollständig automatisierbar und führen in kurzer Zeit zum Auffinden und zur Vornahme einer optimalen Trennung einer Gesamtschaltung in Teilschaltungen mit garantiert stabilen Simulationsergebnissen und ggf. optimal verteiltem Speicher- und Rechenzeitbedarf.

**Bezugszeichen**

| | |
|---|---|
| 1 | Verfahren |
| 2 | elektrische Gesamtschaltung |
| 3 | Recheneinheit |
| 4 | Gesamt-Zustandsraumdarstellung |
| 5a, 5b | Teilschaltungen |
| 6a, 6b | Teil-Zustandsraumdarstellungen |
| 7 | Simulator |
| 8 | I/O-Schnittstelle Simulator |
| 9 | Steuergerät |
| 10 | I/O-Schnittstelle Steuergerät |
| 11 | Koppelgleichungssystem |
| | |
| 100 | Trennungsschritt |
| 110 | Bewertungsschritt |
| 120 | Auswahlschritt |
| 130 | Detektionsschritt |
| 140 | Trennungsausschlussschritt |

**Patentansprüche**

1. Computerimplementiertes Verfahren (1) zur Simulation einer elektrischen Gesamtschaltung (2) mittels wenigstens einer Recheneinheit (3), wobei die elektrische Gesamtschaltung (2) Schaltungskomponenten ($R_1$, $R_2$, $L_1$, $L_2$, $C_1$-$C_4$, $D_1$, $D_2$, $T_1$) aufweist und durch eine Gesamt-Zustandsraumdarstellung (4) mathematisch beschrieben wird, die Gesamtschaltung (2) in einem Trennungsschritt (100) durch Trennen von Schaltungszweigen in wenigstens zwei Teilschaltungen (5a, 5b) zerlegt wird, wobei jede Teilschaltung (5a, 5b) durch jeweils eine Teil-Zustandsraumdarstellung (6a, 6b) mathematisch beschrieben wird, wobei die Teil-Zustandsraumdarstellungen (6a, 6b) über Kopplungsvariablen ($i_{I,II,k}$, $v_{II,I,k}$, $u_{I,MS,k}$, $u_{II,MS,k}$, $y_{I,MS,k}$, $y_{II,MS,k}$) der getrennten Schaltungszweige miteinander gekoppelt sind und jede Teilschaltung (5a, 5b) durch numerisches Lösen der gekoppelten Teil-Zustandsraumdarstellungen (6a, 6b) auf der wenigstens einen Recheneinheit (3) berechnet wird,
**dadurch gekennzeichnet,**
**dass** die Kopplung der Teil-Zustandsraumdarstellungen (6a, 6b) in einem Koppelgleichungssystem (11) zum Austausch der berechneten Kopplungsvariablen zwischen den Teilschaltungen (5a, 5b) abgebildet wird,
**dass** in einem Bewertungsschritt (110) auf Grundlage des Koppelgleichungssystems (11) wenigstens ein Stabilitätsparameter S berechnet wird,
**dass** in einem Auswahlschritt (120) in Abhängigkeit von dem berechneten Stabilitätsparameter S entschieden wird, ob die vorliegende Zerlegung der Gesamtschaltung (2) in Teilschaltungen (5a, 5b) der Simulation zugrunde gelegt wird und
**dass** nach erfolgreicher Auswahl die Simulation der elektrischen Gesamtschaltung (2) durch Berechnung der Teil-Zustandsraumdarstellungen (6a, 6b) auf der wenigstens einen Recheneinheit (3) erfolgt.

2. Verfahren (1) nach Anspruch 1, **dadurch gekennzeichnet, dass** im Falle der direkten numerischen Lösung des Koppelgleichungssystems (11) als Stabilitätsparameter S wenigstens eine der folgenden Größen des Koppelgleichungssystems (11) berechnet wird: die Kondition, die Stabilität, die Konsistenz, die Konvergenz.

3.  Verfahren (1) nach Anspruch 1, **dadurch gekennzeichnet, dass** im Fall der iterativen numerischen Lösung des Koppelgleichungssystems (11) als Stabilitätsparameter S die Eigenwerte des Koppelgleichungssystems (11) bestimmt werden, insbesondere der Spektralradius des Koppelgleichungssystems (11) bestimmt wird.

4.  Verfahren (1) nach einem der Ansprüche 1 bis 3, **dadurch gekennzeichnet, dass** durch das Einfügen wenigstens einer Totzeit in das Koppelgleichungssystem (11) das Koppelgleichungssystem (11) von einem impliziten mathematischen Zusammenhang in einen expliziten mathematischen Zusammenhang zwischen den Kopplungsvariablen überführt wird.

5.  Verfahren nach Anspruch 1 bis 4, **dadurch gekennzeichnet, dass** eine Kopplungsvariable in einem Berechnungsschritt k berechnet wird durch eine Extrapolation mehrerer vorangegangener Werte dieser Kopplungsvariable in vergangenen Berechnungsschritten (k-1, k-2, ...).

6.  Verfahren (1) nach Anspruch 4 oder 5, **dadurch gekennzeichnet, dass** aus den Teil-Zustandsraumdarstellungen (6a, 6b) und den durch die aufgenommenen Totzeiten erweiterten Koppelgleichungen des Koppelgleichungssystems (11) eine zusammengesetzte Gesamt-Zustandsraumdarstellung gebildet wird und als Stabilitätsparameter S die Eigenwerte der zusammengesetzten Gesamt-Zustandsraumdarstellung ermittelt werden.

7.  Verfahren (1) nach Anspruch 6, **dadurch gekennzeichnet, dass** zusätzlich die Eigenwerte der nicht-zusammengesetzten Gesamt-Zustandsraumdarstellung (4) der ungetrennten Gesamtschaltung (2) bestimmt werden und als summarischer Stabilitätsparameter ein Summenabstandsmaß der minimalen Eigenwertabstände zwischen den Eigenwerten der zusammengesetzten Gesamt-Zustandsraumdarstellung und der nicht-zusammengesetzten Gesamt-Zustandsraumdarstellung (4) berechnet wird.

8.  Verfahren (1) nach einem der Ansprüche 1 bis 7, **dadurch gekennzeichnet, dass** die Gesamtschaltung (2) in mehreren Trennungsschritten (100) in mehrere verschiedene Teilschaltungsvarianten zerlegt wird, für jede der verschiedenen Teilschaltungsvarianten in einem Bewertungsschritt wenigstens ein Stabilitätsparameter S berechnet wird, sodass eine Mehrzahl von Stabilitätsparametern S resultiert, und in dem Auswahlschritt (120) in Abhängigkeit von der Mehrzahl berechneter Stabilitätsparameter S, insbesondere durch Vergleich der Mehrzahl berechneter Stabilitätsparameter S, die am besten geeignete Zerlegung der Gesamtschaltung (2) ausgewählt wird.

9.  Verfahren (1) nach einem der Ansprüche 1 bis 8, **dadurch gekennzeichnet, dass** in einem Detektionsschritt (130) zur Detektion abhängiger Schaltungskomponenten ($C_1$, $C_2$) in der Gesamtschaltung (2) die direkt voneinander abhängigen Zustandsgrößen der Gesamtschaltung (2) und damit die linear abhängigen Schaltungskomponenten ($C_1$, $C_2$) ermittelt werden, dass in einem Trennungsausschlussschritt (140) die Schaltungszweige zwischen den abhängigen Schaltungskomponenten ($C_1$, $C_2$) als Orte möglicher Trennungen der Gesamtschaltung (2) ausgeschlossen werden und dass in dem nachfolgenden Trennungsschritt (100) die Schaltungszweige ausgenommen werden, die im Trennungsausschlussschritt (140) als Orte möglicher Trennungen der Gesamtschaltung (2) ausgeschlossen worden sind.

10.  Verfahren (1) nach Anspruch 9, **dadurch gekennzeichnet, dass** in dem Detektionsschritt (130) zur Detektion abhängiger Schaltungskomponenten ($D_2$, $T_1$) in der Gesamtschaltung (2) abhängige Schaltergruppen ermittelt werden, also diejenigen Schalter ($D_2$, $T_1$), die unmittelbaren Einfluss aufeinander haben, und dass in dem Trennungsausschlussschritt (140) die Schaltungszweige zwischen den abhängigen Schaltern der abhängigen Schaltergruppen als Orte einer möglichen Trennung der Gesamtschaltung (2) ausgeschlossen werden.

11.  Verfahren (1) nach einem der Ansprüche 1 bis 10, **dadurch gekennzeichnet, dass** im Trennungsschritt (100) als Ort der Trennung der Gesamtschaltung (2) solche Schaltungszweige ausgewählt werden, die zu einem Koppelgleichungssystem (11) in expliziter mathematischer Form führen, bei dem also kein Durchgriff zwischen den Kopplungsvariablen der Teilschaltungen (5a, 5b) existiert.

12.  Verfahren nach Anspruch 11, **dadurch gekennzeichnet, dass** die Kopplungsvariablen der Teilschaltungen (5a, 5b) nur von nicht-sprungfähigen Zustandsgrößen der jeweiligen Teilschaltung (5a, 5b) abhängen, also beispielsweise von Strömen in Spulen und/oder von Spannungen an Kondensatoren.

13.  Verfahren nach den Ansprüchen 11 oder 12, **dadurch gekennzeichnet, dass** die Teil-Zustandsraumdarstellungen (6a, 6b) mit den internen Zustandsgrößen der Teilschaltungen (5a, 5b) mit einer Kombination aus einem expliziten und einem impliziten numerischen Verfahren gelöst werden.

14. Verfahren (1) nach einem der Ansprüche 1 bis 13, **dadurch gekennzeichnet, dass** die Stabilitätsparameter S für mehrere Kombinationen von Schalterstellungen berechnet werden.

15. Verfahren (1) nach einem der Ansprüche 1 bis 14, **dadurch gekennzeichnet, dass** in dem Trennungsschritt (100) die Wahl der zu trennenden Schaltungszweige der Gesamtschaltung (2) danach erfolgt, ob die entstehenden Teilschaltungen (5a, 5b) in etwa gleich viele Energiespeicher in Form von Spulen und Kondensatoren aufweisen und/oder ob die entstehenden Teilschaltungen (5a, 5b) in etwa gleich viele Schalter aufweisen, insbesondere wobei eine Grenze vorgegeben wird für eine akzeptable Abweichung von der Gleichheit der Anzahl von Energiespeichern und/oder Schaltern und/oder Ein- und/oder Ausgängen.

**Fig. 1**

EP 3 418 924 A1

a)

Linearer Anteil

$\begin{bmatrix} \mathbf{u}_L \\ \mathbf{0} \end{bmatrix}$

D

B  $\dot{\mathbf{x}}$  $\int$  $\mathbf{x}$  C

$\begin{bmatrix} \mathbf{0} \\ \mathbf{u}_{NL} \end{bmatrix}$

A

$\tilde{\mathbf{G}}$  Logic

Nichtlinearer Anteil

$\begin{bmatrix} \mathbf{y}_L \\ \mathbf{y}_{NL} \end{bmatrix}$

b)

Diode:      On : $V_f > 0$      Off : $V_f \leq 0$

MOSFET:    On : $g = 1$      Off : $g = 0$

c)

$\mathbf{x}_k = \mathbf{x}_{k+1}$

$\mathbf{x}_0$

$\mathbf{u}_{L,k}$

Berechnung der Ausgangsgrößen:
$$\mathbf{y}_k = \mathbf{C}_{\mathbf{d}}^{(\xi)}\mathbf{x}_k + \mathbf{D}_{\mathbf{d}}^{(\xi)}\mathbf{u}_{L,k}$$

Gates

$\mathbf{g}$

Bestimmung der Schaltzustände

$\xi$

$\mathbf{x}_0$

Neuberechnung der Zustandsvariablen:
$$\mathbf{x}_{k+1} = \mathbf{\Phi}^{(\xi)}\mathbf{x}_k + \mathbf{H}^{(\xi)}\mathbf{u}_{L,k}$$

4

Fig. 2

EP 3 418 924 A1

Fig. 3

Fig. 4

6a        6b

$\alpha$     $x_{I,0}, u_{I,MS,0}$     $u_{II,MS,0}, x_{II,0}$     $\beta$

**Berechnung der Ausgangsgrößen - subsys. I**

$$y_{I,m,k} = C_{I,m}^{(\alpha)} x_{I,k} + D_{I,m,u}^{(\alpha)} u_{I,int,k} + D_{I,m,MS}^{(\alpha)} u_{I,MS,k}$$

**Berechnung der Ausgangsgrößen - subsys. II**

$$y_{II,m,k} = C_{II,m}^{(\beta)} x_{II,k} + D_{II,m,u}^{(\beta)} u_{II,int,k} + D_{II,m,MS}^{(\beta)} u_{II,MS,k}$$

$g_I$      $g_{II}$

**Bestimmung der Schaltzustände subsys. I**

**Bestimmung der Schaltzustände subsys. II**

**Lade vorberechnete Matrizen vom Speicher**

**Lade vorberechnete Matrizen vom Speicher**

$x_{I,k} = x_{I,k+1}$     $x_{I,0}, u_{I,MS,0}$     $u_{II,MS,0}, x_{II,0}$     $x_{II,k} = x_{II,k+1}$

**Neuberechne Zustände und berechne konstante Ausdrücke**

$$x_{I,k+1} = \Phi_I^{(\alpha)} x_{I,k} + H_{I,u}^{(\alpha)} u_{I,int,k} + H_{I,MS}^{(\alpha)} u_{I,MS,k}$$

$$w_{I,k} = C_{I,MS}^{(\alpha)} x_{I,k} + D_{I,MS,u}^{(\alpha)} u_{I,int,k}$$

**Neuberechne Zustände und berechne konstante Ausdrücke**

$$x_{II,k+1} = \Phi_{II}^{(\beta)} x_{II,k} + H_{II,u}^{(\beta)} u_{II,int,k} + H_{II,MS}^{(\beta)} u_{II,MS,k}$$

$$w_{II,k} = C_{II,MS}^{(\beta)} x_{II,k} + D_{II,MS,u}^{(\beta)} u_{II,int,k}$$

$u_{I,MS,k}$     $w_{I,k}$     $w_{II,k}$     $u_{II,MS,k}$

**Koppelgleichungssystem**

$$\begin{bmatrix} u_{I,MS,k} \\ u_{II,MS,k} \end{bmatrix} = \begin{bmatrix} w_{II,k} \\ w_{I,k} \end{bmatrix} + \begin{bmatrix} 0 & D_{II,MS,MS}^{(\beta)} \\ D_{I,MS,MS}^{(\alpha)} & 0 \end{bmatrix} \begin{bmatrix} u_{I,MS,k} \\ u_{II,MS,k} \end{bmatrix}$$

11

110

s

Fig. 5

21

Fig. 6

Fig. 7

EP 3 418 924 A1

Fig. 8

Fig. 9

Fig. 10

Europäisches Patentamt

European Patent Office

Office européen des brevets

**EUROPÄISCHER RECHERCHENBERICHT**

Nummer der Anmeldung

EP 18 17 8008

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | MARTIN SJÖLUND ET AL: "Parallelizing Equation-Based Models for Simulation on Multi-Core Platforms by Utilizing Model Structure", PROCEEDINGS OF THE 17TH WORKSHOP ON COMPILERS FOR PARALLEL COMPUTING. LYON, FRANCE, JULY 2013., 1. Januar 2013 (2013-01-01), XP055407573, * Zusammenfassung * * II.A par.1; III par.6-7; V par 4+6; * * das ganze Dokument * ----- | 1-15 | INV. G06F17/50 G05B13/04 G05B17/02 |
| Y | ALEXANDER SCHEIDLER ET AL: "Stability and performance of ant queue inspired task partitioning methods", THEORY IN BIOSCIENCES, Bd. 127, Nr. 2, 29. April 2008 (2008-04-29), Seiten 149-161, XP055514606, Berlin/Heidelberg ISSN: 1431-7613, DOI: 10.1007/s12064-008-0033-0 * Zusammenfassung * * Seite 150, rechte Spalte, Absatz 1 * * Seite 154, rechte Spalte, Absatz 3 * * Seite 155, rechte Spalte, Absatz 1 - Absatz 2 * * das ganze Dokument * ----- -/-- | 1-15 | |

RECHERCHIERTE SACHGEBIETE (IPC)

G06F
G05B

Der vorliegende Recherchenbericht wurde für alle Patentansprüche erstellt

| Recherchenort | Abschlußdatum der Recherche | Prüfer |
|---|---|---|
| München | 8. November 2018 | Dapp, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

Seite 1 von 2

Europäisches Patentamt

European Patent Office

Office européen des brevets

## EUROPÄISCHER RECHERCHENBERICHT

Nummer der Anmeldung

EP 18 17 8008

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | Kaj Nyström ET AL: "Parallel Simulation with Transmission Lines in Modelica", Parallel Simulation with Transmission Lines in Modelica, 4. September 2006 (2006-09-04), Seiten 325-331, XP055514620, Gefunden im Internet: URL:https://pdfs.semanticscholar.org/0263/73fbce5fb19de1351e54282b10cd49357c66.pdf [gefunden am 2018-10-11] * Zusammenfassung * * Teil 3 Absatz 1; Teil 3.1 Absatz 3+5; Teil 4.2 Absatz 1; Teil 5.3 Absatz 3; Abbildungen 3, 4 * * das ganze Dokument * ----- | 1-15 | |
| | | | RECHERCHIERTE SACHGEBIETE (IPC) |

Der vorliegende Recherchenbericht wurde für alle Patentansprüche erstellt

| Recherchenort | Abschlußdatum der Recherche | Prüfer |
|---|---|---|
| München | 8. November 2018 | Dapp, Wolfgang |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

....................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Manual of the Electrical Power Systems Simulation Package. September 2016

- *ARTEMiS User Guide", Version 6.1,* 2008